(19) Europäisches Patentamt
European Patent Office
Office européen des brevets

(11) **EP 4 615 117 A1**

(12) **EUROPEAN PATENT APPLICATION**
published in accordance with Art. 153(4) EPC

(43) Date of publication:
**10.09.2025 Bulletin 2025/37**

(21) Application number: **23885553.0**

(22) Date of filing: **20.10.2023**

(51) International Patent Classification (IPC):
**H04W 72/21** (2023.01)   **H04W 72/543** (2023.01)
**H04W 72/566** (2023.01)

(52) Cooperative Patent Classification (CPC):
**H04W 28/0278; H04W 72/21; H04W 72/543;
H04W 72/566; H04W 76/20;** H04W 80/02

(86) International application number:
**PCT/JP2023/037949**

(87) International publication number:
**WO 2024/095791 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022 JP 2022177219**

(71) Applicant: **DENSO CORPORATION**
**Kariya-city, Aichi 448-8661 (JP)**

(72) Inventor: **NAGANO, Tatsuki**
**Kariya- city, Aichi 448-8661 (JP)**

(74) Representative: **TBK**
**Bavariaring 4-6**
**80336 München (DE)**

(54) **TERMINAL DEVICE AND BASE STATION DEVICE**

(57)    A terminal apparatus (10) includes a controller (110) configured to acquire first information related to first data included in certain data and second information related to second data included in the certain data, and a communicator (120) configured to transmit, to a base station apparatus, the first information and the second information as buffer status reporting.

Fig. 11

EP 4 615 117 A1

## Description

Cross-Reference To Related Application

The present application is based on and claims the benefit of priority to Japanese Patent Application No. 2022-177219 filed on November 4, 2022, the contents of which are incorporated herein by reference in its entirety.

Technical Field

The present disclosure relates to a terminal apparatus and a base station apparatus. Background

In recent years, a technology of extended reality (XR) has been developed. XR is a concept including multi-media integration technologies, such as virtual reality (VR), augmented reality (AR), mixed reality (MR), and substitutional reality (SR). In XR, three-dimensional time series image data in a real space and/or a virtual space, audio data of a plurality of channels (stereo, 5.1ch or the like), other data presented to a user, control data, and the like are transmitted and received in parallel. XR requires low latency and high reliability in order to maintain and enhance quality of experience of users.

In NPL 1, implementation of XR in Fifth Generation New Radio (5G NR) being radio specifications defined by the Third Generation Partnership Project (3GPP (trademark)) is studied.

Citation List

Non Patent Literature

[NPL 1] 3GPP TR 38.838 V17.0.0 (2021-12)
[NPL 2] 3GPP TS 38.321 V17.2.0 (2022-09)
[NPL 3] 3GPP TS 38.331 V17.2.0 (2022-09)

## SUMMARY

Incidentally, NPL 2 describes a procedure for buffer status reporting (BSR). Furthermore, NPL 3 describes a parameter for the BSR, the parameter being transmitted from a base station apparatus. The BSR indicates, for certain data, a buffer size of uplink data. The certain data is data corresponding to one logical channel group (LCG). A terminal apparatus calculates the buffer size for each LCG and transmits, to the base station apparatus, a BSR including the calculated buffer size. The base station apparatus allocates a radio resource to the terminal apparatus, based on the BSR.

It is assumed that XR is operated under various requirements including low latency requirements. Accordingly, uplink communication from the terminal apparatus requires that radio resources are allocated in consideration of the requirements. However, in the BSR described in NPL 2 and NPL 3, the terminal apparatus can transmit only one piece of information for the certain data (in other words, data corresponding to one LCG). The inventors have found an issue that there is a possibility that due to a small amount of information provided in a notification to the base station apparatus by using the BSR, the base station apparatus fails to appropriately allocate a radio resource to the terminal apparatus. Note that such an issue occurs in normal terminal apparatuses and base station apparatuses other than the XR implementation as well.

The present disclosure provides a technique to enable notification of more pieces of information to a base station apparatus in BSR.

A terminal apparatus according to the present disclosure includes a controller configured to acquire first information related to first data included in certain data and second information related to second data included in the certain data, and a communicator configured to transmit, to a base station apparatus, the first information and the second information as buffer status reporting (BSR).

Further, a base station apparatus according to the present disclosure includes a communicator configured to receive, as buffer status reporting (BSR), first information related to first data included in certain data and second information related to second data included in the certain data from a terminal apparatus, and a controller configured to allocate, based on the BSR, a radio resource to the terminal apparatus.

According to the configuration described above, the terminal apparatus can notify, for the certain data, the base station apparatus of two pieces of information (in other words, the first information related to the first data and the second information related to the second data). An amount of the information provided in a notification to the base station apparatus by using the BSR is larger than that of the techniques described in NPL 2 and NPL 3. Note that, the configurations above may exert, instead of or together with the above advantageous effects, other advantageous effects.

## BRIEF DESCRIPTION OF THE DRAWINGS

The above and other objects, features, and advantages of the present disclosure will become more apparent in the following detailed description with reference to the accompanying drawings, in which:

    Fig. 1 is a diagram illustrating a communication system S according to a first embodiment;
    Fig. 2 is a diagram illustrating a U-plane protocol stack according to the first embodiment;
    Fig. 3 is a diagram illustrating a C-plane protocol stack according to the first embodiment;
    Fig. 4 is a block diagram illustrating a schematic hardware configuration of a terminal apparatus 10 according to the first embodiment;
    Fig. 5 is a block diagram illustrating a schematic functional configuration of the terminal apparatus 10 according to the first embodiment;

Fig. 6 is a block diagram illustrating a schematic hardware configuration of a base station apparatus 20 according to the first embodiment;

Fig. 7 is a block diagram illustrating a schematic functional configuration of the base station apparatus 20 according to the first embodiment;

Fig. 8 is a diagram illustrating a radio frame configuration according to the first embodiment;

Fig. 9 is a diagram illustrating a configuration of a short BSR;

Fig. 10 is a diagram illustrating a configuration of a long BSR;

Fig. 11 is a diagram illustrating a configuration of a first BSR according to the first embodiment;

Fig. 12 is a diagram illustrating a configuration of a second BSR according to the first embodiment;

Fig. 13 is a sequence diagram illustrating a flow of processing by the terminal apparatus 10 and the base station apparatus 20 according to the first embodiment;

Fig. 14 is a sequence diagram illustrating a flow of processing by the terminal apparatus 10 according to the first embodiment;

Fig. 15 is a diagram illustrating a configuration of the first BSR according to an alteration;

Fig. 16 is a diagram illustrating a configuration of a first BSR according to a second embodiment; and

Fig. 17 is a diagram illustrating a configuration of a first BSR according to a third embodiment.

## DETAILED DESCRIPTION

Hereinafter, embodiments of the present disclosure will be described in detail with reference to the accompanying drawings. Note that, in the Specification and drawings, elements to which similar descriptions are applicable are denoted by the same reference signs, and overlapping descriptions may hence be omitted.

Each embodiment described below is merely an example of a configuration that can implement the present disclosure. Each embodiment described below can be appropriately modified or changed according to a configuration of an apparatus to which the present disclosure is applied and various conditions. All of combinations of elements included in each embodiment described below are not necessarily required to implement the present disclosure, and a part of the elements can be appropriately omitted. Hence, the scope of the present disclosure is not limited by the configuration described in each embodiment described below. Configurations in which a plurality of configurations described in the embodiments below are combined can also be employed unless the configurations are consistent with each other.

### 1. First Embodiment

1.1. Communication System

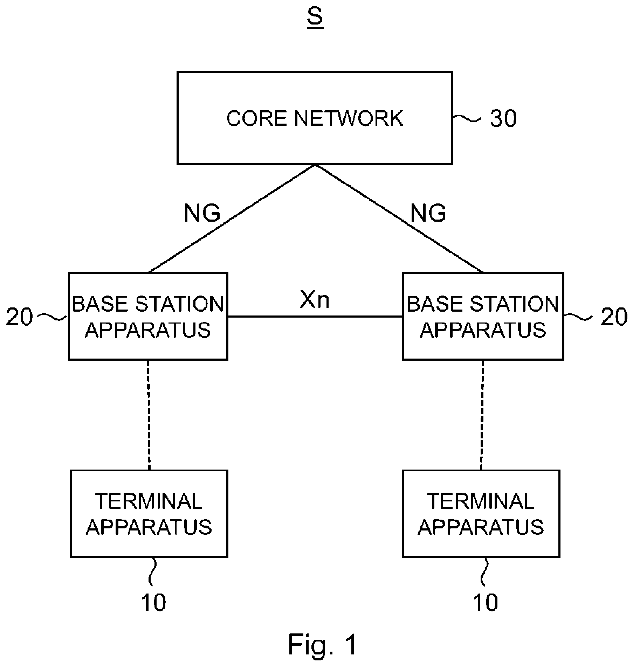

As illustrated in Fig. 1, a communication system S according to a first embodiment includes one or more terminal apparatuses 10, one or more base station apparatuses 20, and a core network 30. The communication system S is configured in accordance with certain technical specifications (TS). For example, the communication system S may be compliant with technical specifications defined by 3GPP (for example, 5G, 5G advanced, 6G, or the like).

In the communication system S, a user plane in which user data is transmitted and received and a control plane in which control data is transmitted and received are separately configured. In other words, the communication system S supports C/U split. The user plane is abbreviated to the U plane, and the control plane is abbreviated to the C plane.

The terminal apparatus 10 may be a device that performs radio communication with the base station apparatus 20, and may be, for example, a user equipment (UE) that operates in accordance with 5G NR specifications of 3GPP. The terminal apparatus 10 may be an apparatus that is compliant with other older or newer 3GPP specifications.

The terminal apparatus 10 may be, for example, a mobile phone terminal such as a smartphone, a tablet terminal, a notebook PC, a communication module, a communication card, or an IoT device such as a surveillance camera and a robot. The terminal apparatus 10 may be a vehicle (for example, a car, a train, or the like), or an apparatus mounted on the vehicle. The terminal apparatus 10 may be a transport machine body other than the vehicle (for example, a ship, an airplane, or the like), or an apparatus mounted on the transport machine body. The terminal apparatus 10 may be a sensor, or an apparatus provided with the sensor. Note that the terminal apparatus 10 may be referred to as another name such as a terminal, a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, and a remote unit. The terminal apparatus 10 is preferably an apparatus adapted to one or more of enhanced mobile broadband (eMBB), ultra-reliable and low-latency communications (URLLC), and massive machine type communications (mMTC).

The base station apparatus 20 manages at least one cell. The cell configures a minimum unit of a communication area. For example, one cell belongs to one frequency (for example, carrier frequency), and is configured with one component carrier. The term "cell" may represent radio communication resources, and may represent a communication target of the terminal apparatus 10. The base station apparatus 20 performs radio communication with the terminal apparatus 10 existing in the cell of the base station apparatus 20 in the U plane and the C plane. In other words, the base station apparatus 20 terminates a U plane protocol and a C plane protocol for the terminal apparatus 10.

The base station apparatus 20 communicates with the core network 30 in the U plane and the C plane. More specifically, the core network 30 includes a plurality of logical nodes including an Access and Mobility Management Function (AMF) and a User Plane Function (UPF). The base station apparatus 20 connects to the AMF in the C plane, and connects to the UPF in the U plane.

The base station apparatus 20 may be a gNB that provides the terminal apparatus 10 with the U plane and the C plane conforming to 5G New Radio (NR) specifications of 3GPP and connects to a 5G core network (5GC) of 3GPP, for example. The base station apparatus 20 may be an apparatus conforming to other older or newer specifications of 3GPP.

The base station apparatus 20 may be configured by a plurality of unit apparatuses. For example, the base station apparatus 20 may include a central unit (CU), a distributed unit (DU), and a radio unit (RU).

With a configuration in which a plurality of base station apparatuses 20 are connected to each other, a radio access network (RAN) is formed. The radio access network formed by the base station apparatus 20 being a gNB may be referred to as an NG-RAN. The base station apparatus 20 being a gNB may be referred to as an NG-RAN node.

The plurality of base station apparatuses 20 are connected to each other by a predetermined interface (for example, an Xn interface). More specifically, for example, the plurality of base station apparatuses 20 are connected to each other by an Xn-U interface in the U plane, and are connected to each other by an Xn-C interface in the C plane. Note that the plurality of base station apparatuses 20 may be connected to each other by another interface having a different function and name.

Each base station apparatus 20 is connected to the core network 30 by a predetermined interface (for example, an NG interface). More specifically, for example, each base station apparatus 20 is connected to the UPF of the core network 30 by an NG-U interface in the U plane, and is connected to the AMF of the core network 30 by an NG-C interface in the C plane. Note that each base station apparatus 20 may be connected to the core network 30 by another interface having a different function and name.

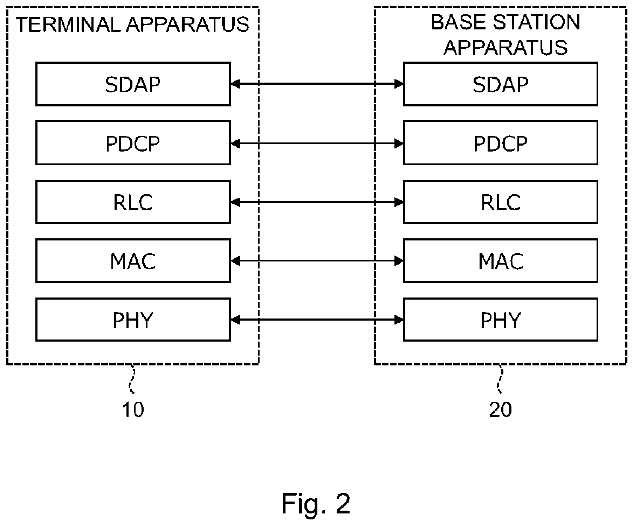

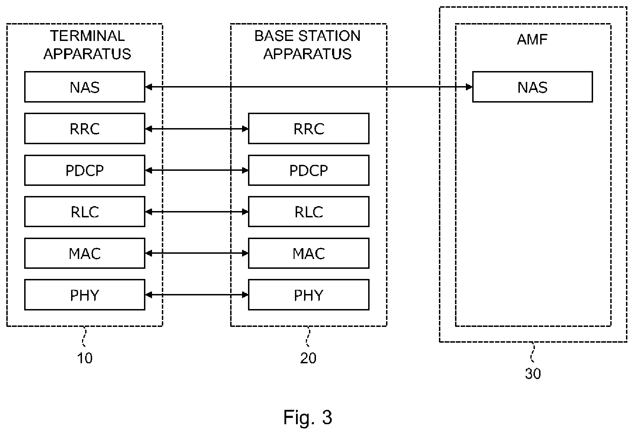

With reference to Fig. 2, a radio protocol architecture between the terminal apparatus 10 and the base station apparatus 20 will be described. With reference to Fig. 3, radio protocol architectures between the terminal apparatus 1 and the base station apparatus 20 and between the terminal apparatus 10 and the core network 30 will be described.

As illustrated in Fig. 2, a protocol stack in the U plane is provided with, in order from the lowest layer, a Physical (PHY) layer, a Media Access Control (MAC) layer, a Radio Link Control (RLC) layer, a Packet Data Convergence Protocol (PDCP) layer, and a Service Data Adaptation Protocol (SDAP) layer. Each of the layers is terminated in the base station apparatus 20 on the network side.

As illustrated in Fig. 3, a protocol stack in the C plane is provided with, in order from the lowest layer, a Physical (PHY) layer, a Media Access Control (MAC) layer, a Radio Link Control (RLC) layer, a Packet Data Convergence Protocol (PDCP) layer, a Radio Resource Control (RRC) layer, and a Non-Access Stratum (NAS). Each of the layers, except the Non-Access Stratum, is terminated in the base station apparatus 20 on the network side. The Non-Access Stratum is terminated in the AMF of the core network 30 on the network side.

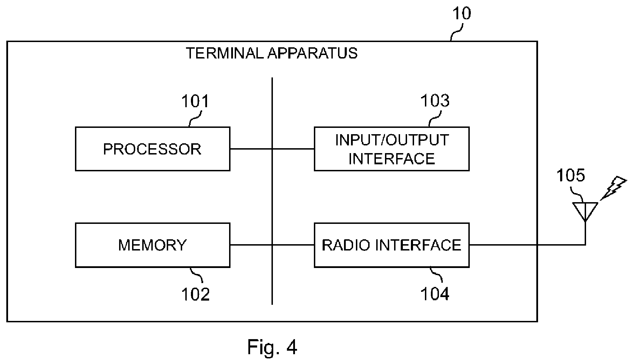

As illustrated in Fig. 4, the terminal apparatus 10 includes, as hardware elements, a processor 101, a memory 102, an input/output interface 103, a radio interface 104, and an antenna 105. The above elements provided in the terminal apparatus 10 are connected to each other via an internal bus. Note that the terminal apparatus 10 may include a hardware element other than the elements illustrated in Fig. 4.

The processor 101 is an arithmetic element that implements various functions of the terminal apparatus 10. The processor 101 may be a central processing unit (CPU), a graphics processing unit (GPU), and a system-on-a-chip (SoC) including an element such as a memory controller.

The memory 102 includes at least one storage medium, such as a random access memory (RAM) and an embedded multi media card (eMMC). The memory 102 is an element that temporarily or permanently stores a program and data used to execute various types of processing in the terminal apparatus 10. The program includes one or more instructions for operations of the terminal apparatus 10. The processor 101 deploys the program stored in the memory 102 into the memory 102 itself and/or a system memory (not illustrated), and executes the program to thereby implement the functions of the terminal apparatus 10.

The input/output interface 103 is an interface that receives an operation to the terminal apparatus 10 and supplies the operation to the processor 101, and presents various pieces of information to a user. The input/output interface 103 is a touch panel, for example.

The radio interface 104 is a circuit that executes various types of signal processing for implementing radio communication, and includes a baseband processor and an RF circuit. The radio interface 104 transmits and receives a radio signal to and from the base station apparatus 20 via the antenna 105.

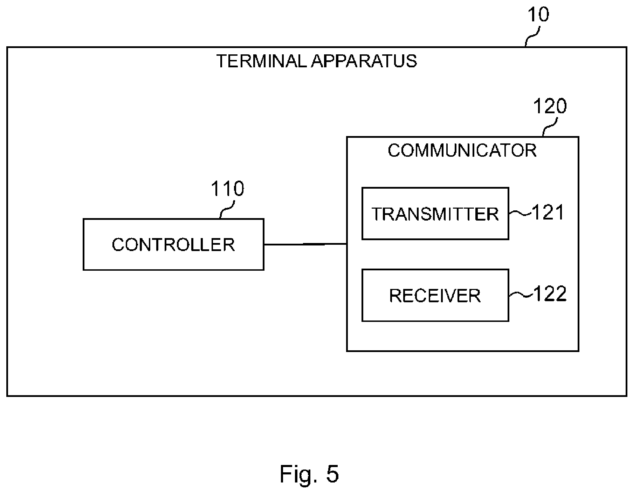

As illustrated in Fig. 5, the terminal apparatus 10 includes, as functional blocks, a controller 110 and a communicator 120. The communicator 120 includes at least one transmitter 121 and at least one receiver 122.

The controller 110 may include at least one processor 101 and at least one memory 102. In other words, the controller 110 may be implemented by the processor 101 and the memory 102. The controller 110 executes various types of control processing in the terminal apparatus 10. For example, the controller 110 controls radio communication with the base station apparatus 20 via the communicator 120. In other words, the controller 110 performs, via the communicator 120, transmission/reception of data/information/message.

The communicator 120 includes the radio interface 104 and the antenna 105. In other words, the communicator 120 is implemented by the radio interface 104 and the antenna 105. The communicator 120 transmits and receives a radio signal to and from the base station apparatus 20, and thereby performs radio communication with the base station apparatus 20. The communicator 120 may include two or more radio interfaces 104 and two or more antennas 105.

When the controller 110 operates, the various types of processing of the terminal apparatus 10 according to the present embodiment are executed.

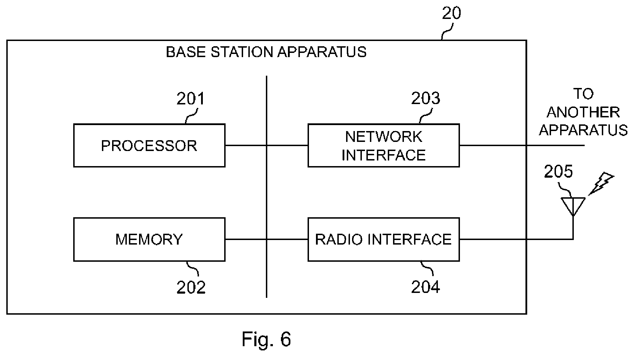

As illustrated in Fig. 6, the base station apparatus 20 includes, as hardware elements, a processor 201, a memory 202, a network interface 203, a radio interface 204, and an antenna 205. The above elements provided in the base station apparatus 20 are connected to each other via an internal bus. Note that the base station apparatus 20 may include a hardware element other than the elements illustrated in Fig. 6.

The processor 201 is an arithmetic element that implements various functions of the base station apparatus 20. The processor 201 may be a CPU, and may further include another processor such as a GPU.

The memory 202 includes at least one storage medium, such as a read only memory (ROM), a RAM, a hard disk drive (HDD), and a solid state drive (SSD). The memory 202 is an element that temporarily or permanently stores a program and data used to execute various types of processing in the base station apparatus 20. The program includes one or more instructions for operations of the base station apparatus 20. The processor 201 deploys the program stored in the memory 202 into the memory 202 itself and/or a system memory (not illustrated), and executes the program to thereby implement the functions of the base station apparatus 20.

The network interface 203 is an interface used to transmit and receive a signal to and from another base station apparatus 20 and the core network 30.

The radio interface 204 is a circuit that executes various types of signal processing for implementing radio communication, and includes a baseband processor and an RF circuit. The radio interface 204 transmits and receives a radio signal to and from the base station apparatus 20 via the antenna 205.

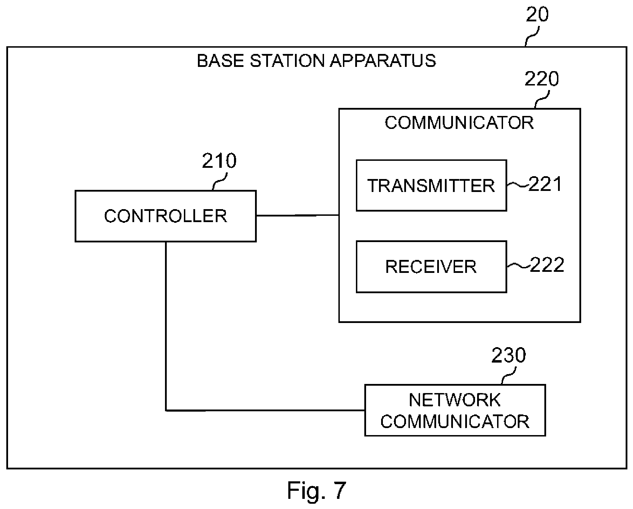

As illustrated in Fig. 7, the base station apparatus 20 includes, as functional blocks, a controller 210, a communicator 220, and a network communicator 230.

The communicator 220 includes at least one transmitter 221 and at least one receiver 222.

The controller 210 may include at least one processor 201 and at least one memory 202. In other words, the controller 210 may be implemented by the processor 201 and the memory 202. The controller 210 executes various types of control processing in the base station apparatus 20. For example, the controller 210 controls radio communication with the terminal apparatus 10 via the communicator 220. In other words, the controller 210 performs, via the communicator 220, transmission/reception of data/information/message. For example, the controller 210 controls communication with another node (for example, another base station apparatus 20, a node of the core network 30) via the network communicator 230.

The communicator 220 includes the radio interface 204 and the antenna 205. In other words, the communicator 220 is implemented by the radio interface 204 and the antenna 205. The communicator 220 transmits and receives a radio signal to and from the terminal apparatus 10, and thereby performs radio communication with the terminal apparatus 10. The communicator 220 may include two or more radio interfaces 204 and two or more antennas 205.

The network communicator 230 includes the network interface 203. In other words, the network communicator 230 is implemented by the network interface 203. The network interface 203 transmits and receives a signal to and from the network (ultimately, another node described above).

When the controller 210 operates, the various types of processing of the base station apparatus 20 according to the present embodiment are executed.

1.2. Radio Resources

The terminal apparatus 10 and the base station apparatus 20 perform radio communication with each other, using radio resources in the frequency domain and the time domain. The radio resources will be described below.

A transmission method of downlink communication from the base station apparatus 20 to the terminal apparatus 10 is, for example, orthogonal frequency division multiplexing (OFDM) using a cyclic prefix (CP), that is, CP-OFDM. A transmission method of uplink communication from the terminal apparatus 10 to the base station apparatus 20 is, for example, CP-OFDM described above, or DFTS-OFDM in which CP-OFDM is applied subsequently to transform precoding for performing discrete Fourier transform (DFT) spreading.

The cyclic prefix is a redundant signal that functions as a guard period for preventing inter-symbol interference and inter-carrier interference, and is inserted at the start of an OFDM symbol. Types of the cyclic prefix include a normal cyclic prefix and an extended cyclic prefix.

As the radio resources in the frequency domain of OFDM, a plurality of subcarriers being orthogonal to each other are used. The plurality of subcarriers are allocated with a predetermined subcarrier spacing (sub-carrier spacing (SCS)) Δf in the frequency domain. In the communication system S, a plurality of subcarrier spacings Δf may be applied. The subcarrier spacing Δf is expressed by the following expression, for example.

$$\Delta f = 2^{\mu} \cdot 15 \ [\text{kHz}]$$

Here, μ is an integer of 0 or greater, and may be any one of values of 0, 1, 2, 3, 4, 5, and 6. Accordingly, the subcarrier spacing Δf [kHz] may be any one of values of 15, 30, 60, 120, 240, 480, and 960. Note that μ may be a value of 7 or greater.

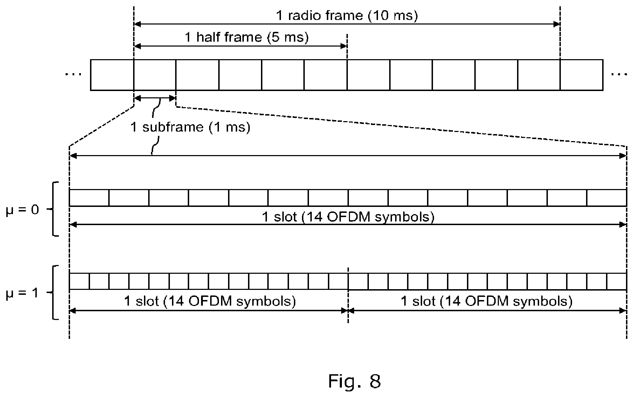

In the time domain of OFDM, as illustrated in Fig. 8, a hierarchical radio frame configuration is used. One radio frame includes 10 subframes. The subframes are numbered with subframe numbers counting up from 0 to 9 by one. One radio frame is divided into two half frames. A time length of the radio frame is 10 ms, a time length of the half frame is 5 ms, and a time length of the subframe is 1 ms. The above time lengths are not dependent upon the subcarrier spacing Δf.

One subframe includes one or more slots. The number Ns of slots included in one subframe is dependent upon the value of μ described above, ultimately the subcarrier spacing Δf. The number Ns of slots is expressed by the following expression, for example.

$$Ns = 2^{\mu}$$

One slot includes a plurality of symbols. The number of symbols included in one slot is dependent upon the type of cyclic prefix. For example, in a configuration in which the normal cyclic prefix is used, one slot includes 14 symbols. For example, in a configuration in which the extended cyclic prefix is used, one slot includes 12 symbols.

As described above, the number of slots and the number of symbols included in each of the radio frame, the half frame, and the subframe having a fixed time length are variable. Accordingly, the time length of the slot and the time length of the symbol are also variable.

A resource element (RE) is a radio resource unit in the time-frequency domain including one subcarrier and one symbol. A resource block (RB) is a radio resource unit in the time-frequency domain including 12 subcarriers and a plurality of symbols.

The radio frames are assigned system frame numbers (SFNs) counted up from 0 to 1023 in increments of 1. The SFN "0" corresponds to an initial SFN value, and the SFN "1023" corresponds to the largest SFN value. Hence, SFN 0 is assigned to a radio frame that follows a radio frame assigned SFN 1023. The time length of the radio frame is 10 ms, and accordingly the time length of one cycle of the system frame number is 10240 ms (= 10.24 seconds).

Here, the base station apparatus 20 may configure one or a plurality of serving cells for the terminal apparatus 10. The serving cell may correspond to a downlink component carrier and/or an uplink component carrier. A technology in which one or a plurality of serving cells are configured and the base station apparatus 20 and the terminal apparatus 10 perform radio communication may also be referred to as carrier aggregation.

The base station apparatus 20 may configure one or a plurality of bandwidth parts (BWPs) for the terminal apparatus 10 for each of one or a plurality of serving cells. For example, in the downlink of one serving cell, a downlink bandwidth part (DL-BWP) may be configured. In the uplink of one serving cell, an uplink bandwidth part (UL-BWP) may be configured. Here, the DL-BWP may include an initial DL-BWP and/or a dedicated DL-BWP. The UL-BWP may include an initial UL-BWP and/or a dedicated UL-BWP. In the following, the BWP may include the DL-BWP and/or the UL-BWP.

1.3. Channels and Control Information

The terminal apparatus 10 and the base station apparatus 20 transmit and receive user data and control information to and from each other. Transmission and reception of downlink and uplink control information will be illustrated below.

The terminal apparatus 10 and the base station apparatus 20 transmit and receive user data and control information, using a plurality of hierarchical channels. A physical channel is a channel used for physical communication between the terminal apparatus 10 and the base station apparatus 20. Examples of physical channels include a physical downlink control channel (PDCCH), a physical broadcast channel (PBCH), and a physical uplink control channel (PUCCH).

A transport channel is a channel located higher than the physical channel, and is mapped to the physical channel in a PHY layer. A plurality of transport channels may be mapped to one physical channel. Examples of the transport channel include a downlink common channel (DownLink Shared Channel, DL-SCH) and an uplink common channel (UpLink Shared Channel, UL-SCH). For example, data in downlink is also referred to as data of the DL-SCH. For example, data in uplink data is also referred to as data of the UL-SCH. Here, the data of the DL-SCH includes user data in downlink. The data of the UL-SCH includes user data in uplink.

A logical channel is a channel located higher than the transport channel, and is mapped to the transport channel in the MAC layer. A plurality of logical channels may be mapped to one transport channel, and one logical channel may be mapped to a plurality of transport channels. The logical channels are classified by characteristics of information to be transmitted. Examples of logical channels include a broadcast control channel (BCCH), a common control channel (CCCH), and a dedicated control channel (DCCH).

The base station apparatus 20 transmits downlink control information (DCI) to the terminal apparatus 10, using the PDCCH being a physical channel. The DCI includes information related to downlink and uplink resource allocations to the terminal apparatus 10 and other control information of the terminal apparatus 10. The DCI is mapped to the PDCCH, and corresponds to layer 1 signaling.

Here, regarding transmission of the DCI on the PDCCH, one or a plurality of formats may be defined. A format defined regarding transmission of the DCI on the PDCCH may be referred to as a DCI format. For example, the DCI format may include a DCI format (for example, a format referred to as DCI format 1_0, DCI format 1_1, and/or DCI format 1_2) used for scheduling of a physical downlink shared channel (PDSCH). For example, the DCI format may include a DCI format (for example, a format referred to as DCI format 0_0, DCI format 0_1, and/or DCI format 0_2) used for scheduling of a physical uplink shared channel (PUSCH). The DCI format may include a DCI format not used for scheduling of the PDSCH and/or the PUSCH. The DCI format used for scheduling of the PDSCH and/or the PUSCH may be referred to as a scheduling DCI format. The DCI format not used for scheduling of the PDSCH and/or the PUSCH may be referred to as a non-scheduling DCI format. In the present embodiment, for the sake of simplicity of description, the "DCI format" may be simply referred to as the "PDCCH". The "DCI generated according to the DCI format" may be simply referred to as the "DCI format".

For example, the base station apparatus 20 may configure frequency domain resources and/or time domain resources for the terminal apparatus 10 to monitor a PDCCH candidate set. For example, the frequency domain resources in which the terminal apparatus 10 monitors the PDCCH candidate set may be referred to as a control resource set (CORESET). The time domain resources in which the terminal apparatus 10 monitors the PDCCH candidate set may be referred to as a search space set (SSS). The terminal apparatus 10 may monitor the PDCCH candidate set in one or a plurality of CORESETs in the DL-BWP of the serving cell configured with PDCCH monitoring according to a corresponding search space set. Here, to monitor may connote to attempt to decode each of the PDCCH candidates according to the monitored DCI format. The configuration described above may be referred to as blind decoding.

Here, a cyclic redundancy check (CRC) scrambled using a radio network temporary identifier (RNTI) may be added to the DCI (or the DCI format) to be transmitted on the PDCCH. The CRC may also be referred to as a CRC parity bit. A plurality of types of RNTIs are defined. For example, the base station apparatus 20 may transmit an RRC message including at least one of information indicating a Cell-RNTI (C-RNTI), information indicating a Modulation and Coding Scheme Cell-RNTI (MCS-C-RNTI), and information indicating a Configured Scheduling-RNTI (CS-RNTI) to thereby configure each RNTI. In other words, a CRC scrambled using at least one of the C-RNTI, the MCS-C-RNTI, and the CS-RNTI may be added to the DCI (or the DCI format) to be transmitted on the PDCCH.

The terminal apparatus 10 may monitor (and/or receive) the PDCCH and detect (and/or receive) the DCI format.

The terminal apparatus 10 transmits, to the base station apparatus 20, uplink control information (UCI) by using a PUCCH being a physical channel. The UCI includes control information such as a scheduling request (SR), a hybrid automatic repeat request (HARQ) Ack/Nack, and channel state information (CSI). The UCI is mapped to the PUCCH or the PUSCH, and corresponds to Layer 1 signaling.

The base station apparatus 20 transmits, to the terminal apparatus 10, a control element (CE) of a MAC layer by using a DL-SCH being a transport channel. The downlink MAC CE is mapped to a PDSCH via the DL-SCH, and corresponds to Layer 2 signaling.

The terminal apparatus 10 transmits, to the base station apparatus 20, a control element (CE) of a MAC layer by using a UL-SCH being a transport channel. The uplink MAC CE includes control information such as buffer status reporting (BSR). The uplink MAC CE is mapped to a PUSCH via the UL-SCH, and corresponds to Layer 2 signaling.

The base station apparatus 20 transmits (or broadcasts) system information (SI) to the terminal apparatus 10, using the BCCH being a logical channel. The SI includes minimum system information (MSI) and other system information (OSI). The MSI includes a master information block (MIB) and a system information block 1 (SIB1). The SIB1 may be referred to as remaining minimum system information (RMSI). The OSI includes system information blocks (from SIB2), other than the SIB1. Of the BCCH, the MIB is mapped to the PBCH via the broadcast channel (BCH), and the SIB is mapped to the PDSCH via the DL-SCH.

The base station apparatus 20 transmits control information in the RRC layer to the terminal apparatus 10, using a signaling radio bearer (SRB) established between the terminal apparatus 10 and the base station apparatus 20 in the RRC layer. A message exchanged between the base station apparatus 20 and the terminal apparatus 10 in the RRC layer may be hereinafter referred to as an RRC message. A plurality of types of SRBs (for example, SRB0, SRB1, SRB2, SRB3, and SRB4) are present. The SRB is used to transmit and receive a NAS message including control information in the NAS layer, other than the RRC message. To transmit the RRC message from the base station apparatus 20 to the terminal apparatus 10, the CCCH or the DCCH is used. The CCCH and the DCCH are each mapped to the PDSCH via the DL-SCH. The RRC message corresponds to layer 3 signaling.

As an example of a downlink RRC message, an RRC reconfiguration (RRCReconfiguration) message will be described. The RRC reconfiguration message is an RRC message transmitted from the base station apparatus 20 to the terminal apparatus 10 using SRB1 or SRB3. The DCCH is used to transmit the RRC reconfiguration message. The RRC reconfiguration message is used to perform reconfiguration or modification of connection between the base station apparatus 20 and the terminal apparatus 10.

The terminal apparatus 10 transmits the RRC message to the base station apparatus 20, using the SRB described above. To transmit the RRC message from the terminal apparatus 10 to the base station apparatus 20, the CCCH or the DCCH is used. The CCCH and the DCCH are each mapped to the PUSCH via the UL-SCH. The RRC message corresponds to layer 3 signaling.

As an example of an uplink RRC message, a user equipment capability information (UECapabilityInformation) message will be described. The user equipment capability information message is an RRC message transmitted from the terminal apparatus 10 to the base station apparatus 20 using SRB1. The DCCH is used to transmit the user equipment capability information message. The user equipment capability information message is used to notify the base station apparatus 20 of information related to a radio access capability of the terminal apparatus 10.

As an example of an uplink RRC message, a user equipment assistance information (UEAssistanceInformation) message will be described. The user equipment assistance information message is an RRC message transmitted from the terminal apparatus 10 to the base station apparatus 20 using SRB1 or SRB3. The DCCH is used to transmit the user equipment assistance information message. The user equipment assistance information message is used to notify the base station apparatus 20 of various pieces of information (UE assistance information) related to the terminal apparatus 10.

1.4. Uplink Scheduling

1.4.1. Scheduling Request (SR)

An SR is used for the terminal apparatus 10 to request the base station apparatus 20 to perform PUSCH radio resource allocation. The SR may be used to request a UL-SCH resource for initial transmission. The base station apparatus 20 allocates a resource for a PUCCH for transmitting the SR, to the terminal apparatus 10. The base station apparatus 20 transmits an RRC message including an SR parameter to the terminal apparatus 10. The SR parameter is included in a SchedulingRequestResourceConfig IE, which is an example of an RRC information element (IE).

The terminal apparatus 10 transmits UCI including an SR to the base station apparatus 20 by using a configured PUCCH resource. The terminal apparatus 10 may transmit the UCI on demand. The terminal apparatus 10 may transmit the UCI in configured periodicity. For example, the terminal apparatus 10 may transmit an SR set at "0" (negative SR) and/or an SR set at "1" (positive SR). The base station apparatus 20 allocates a radio resource for the PUSCH to the terminal apparatus 10, in response to the SR.

1.4.2. Configured Grant (CG)

CG is a scheduling method for allocating a radio resource for the PUSCH without a procedure for transmitting an SR. The CG includes two types, type 1 and type 2. The base station apparatus 20 transmits, to the terminal apparatus 10, an RRC message including a parameter for the CG. The parameter for the CG is included in ConfiguredGrantConfig IE that is an example of an RRC information element (IE). ConfiguredGrantConfig IE includes a parameter "periodicity" related to periodicity of transmission using a PUSCH. Note that the parameter "periodicity" is configured in units of the number of slots or the number of symbols. Alternatively, the parameter "periodicity" may be configured in units of a frame per second (FPS). In type 1, the terminal apparatus 10 starts to transmit a signal at configured periodicity without a trigger by DCI. On the other hand, in type 2, the base station apparatus 20 transmits, to the terminal apparatus 10, DCI scrambled by a Configured Scheduling Radio Network Temporary Identifier (CS-RNTI). The CS-RNTI is used to activate periodic transmission. In response to the activation by the DCI scrambled by the CS-RNTI, the terminal apparatus 10 starts the transmission using the PUSCH at configured periodicity.

1.4.3. Buffer Status Reporting (BSR)

The terminal apparatus 10 transmits a BSR via MAC signaling by using an allocated PUSCH radio resource. The BSR is a MAC CE included in a Medium Access Control Protocol Data Unit (MAC PDU). The BSR indicates information related to a buffer status of uplink data in a MAC entity. The base station apparatus 20 allocates, based on the BSR, a radio resource for uplink to the terminal apparatus 10.

In the BSR, logical channels (LCHs) are allocated to logical channel groups (LCGs). Each LCG includes one or more logical channels. The terminal apparatus 10 calculates a buffer size of the uplink data for each LCG. The terminal apparatus 10 transmits the buffer size corresponding to each LCG, to the base station apparatus 20, as a BSR.

The base station apparatus 20 transmits, to the terminal apparatus 10, an RRC message including a parameter for the BSR. The parameter for the BSR is included in a BSR-Config IE that is an example of an RRC information element (IE). For example, the BSR-Config IE includes three timers: periodicBSR-Timer, retxBSR-Timer, and logical Channel SR-Delay Timer.

The parameter associated with the LCG is included in a Logical Channel Config IE that is an example of an RRC information element (IE). In other words, the base station apparatus 20 may transmit an RRC message including the LogicalChannelConfig IE. The terminal apparatus 10 may identify, based on the Logical-ChannelConfig IE included in the RRC message, configuration related to a logical channel and/or an LCG. For example, the LogicalChannelConfig IE includes a logical Channel Group IE. A logical channel is allocated to an LCG by using the logicalChannelGroup IE. For example, an LCG index (ID) may be configured for each of one or a plurality of logical channels, and an LCG to which the one or plurality of logical channels belong may be configured. Note that the LogicalChannelConfig IE may include a logicalChannelGroupIAB-Ext IE. The logicalChannel-GroupIAB-Ext IE is applied only to Integrated Access Backhaul-Mobile Termination (IAB-MT). In a case where the logicalChannelGroupIAB-Ext IE is configured, the LogicalChannelConfig IE is ignored.

The terminal apparatus 10 may trigger a BSR in accordance with a certain condition. For example, the terminal apparatus 10 may trigger the BSR when one of the following conditions (a1) to (a4) is satisfied for an activated cell group. Note that the following conditions may be referred to as an "event."

(a1) For a logical channel belonging to an LCG, uplink data becomes available to a MAC entity, and one of the following two conditions is satisfied.

- The uplink data belongs to a logical channel with high priority than the priorities of the logical channels containing available uplink data which belong to any LCG.
- None of the logical channels which belong to an LCG contain any available uplink data.

(a2) Uplink resources are allocated, and the number of padding bits is greater than or equal to a size of a BSR MAC CE plus its subheader for the BSR MAC CE.
(a3) retxBSR-Timer expires, and at least one of logical channels which belong to an LCG contains uplink data.
(a4) periodicBSR-Timer expires.

The BSR includes at least a regular BSR, a padding BSR, and a periodic BSR. The regular BSR, the padding BSR, and the periodic BSR may be triggered based on different conditions. For example, the terminal apparatus 10 triggers the regular BSR in a case where one of the conditions (a1) and (a3) is satisfied. The terminal apparatus 10 triggers the padding BSR in a case where the condition (a2) is satisfied. The terminal apparatus 10 triggers the periodic BSR in a case where the condition (a4) is satisfied.

The BSR includes a plurality of formats. The plurality of formats include at least a short BSR and a long BSR. The MAC PDU including the BSR includes a MAC subheader. The MAC subheader includes a logical channel identifier (LCID) or an extended logical channel identifier (eLCID). A value of the LCID or the eLCID may be referred to as a codepoint. The short BSR and the long BSR are identified by values of the codepoint.

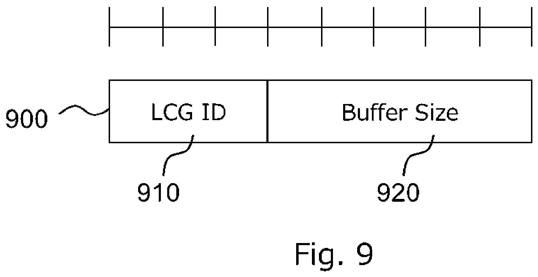

The short BSR is a format for reporting a buffer status (in other words, a buffer size) of one LCG. As shown in Fig. 9, the short BSR includes one field 900 having a fixed size of 8 bits. The field 900 includes a first portion 910 and a second portion 920.

The first portion 910 consists of 3 bits. The first portion 910 is information for identifying an LCG for which a buffer status is reported. The first portion 910 may be referred to as an "LCG ID field."

The second portion 920 consists of 5 bits. The second portion 920 is information for identifying a total amount of data available in all the logical channels included in the LCG indicated by the first portion 910. The second portion 920 may be simply referred to as a "buffer size." The second portion 920 indicates an index indicating the number of bytes. For example, the second portion 920 indicates one of values of 0 to 31.

Note that the short BSR may include a Truncated format that is a format for a logical channel with a higher priority, and an Extended format that is a format with which a larger amount of information can be transmitted.

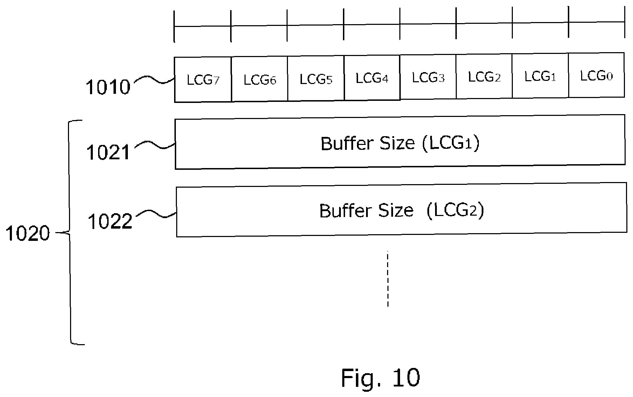

The long BSR is a format for reporting buffer statuses (in other words, buffer sizes) of a plurality of LCGs. As shown in Fig. 10, the long BSR has a variable size. The long BSR includes an LCG field 1010 and a buffer size field 1020.

The LCG field 1010 consists of 8 bits. In the LCG field 1010, 8 bits correspond to 8 respective LCGi. Here, i is an integer from 0 to 7. The definition of i is the same in the following description. The LCG field 1010 may indicate whether a buffer size field for LCGi is present. For example, in the LCG field 1010, a value of LCGi being 1 indicates that a buffer size field corresponding to LCGi is present. The value of LCGi being 0 indicates that a buffer size field corresponding to LCGi is absent.

In another example, the LCG field 1010 may indicate whether LCGi has available data. For example, in the LCG field 1010, a value of LCGi being 1 indicates that LCGi has available data. The value of LCGi being 0 indicates that LCGi does not have available data.

The number of fields included in the buffer size field 1020 is variable depending on a value of the LCG field 1010. In an example in Fig. 10, assume that in the LCG field 1010, a bit corresponding to $LCG_1$ and a bit corresponding to $LCG_2$ are 1 and 1, respectively. Accordingly, the buffer size field 1020 includes a field 1021 corresponding to $LCG_1$ and a field 1022 corresponding to $LCG_2$. Note that a bit corresponding to $LCG_0$ is assumed to be 0 in Fig. 10, and thus the buffer size field 1020 does not include a field corresponding to $LCG_0$.

Each field included in the buffer size field 1020 consists of 8 bits. Each field indicates an index indicating the number of bytes. For example, each field indicates one of values of 0 to 254.

Note that, as with the short BSR, the long BSR may include a Truncated format and an Extended format.

The BSR may include a Pre-emptive BSR format and an Extended Pre-emptive BSR format. These formats are used in an IAB-MT.

The terminal apparatus 10 may select either the short BSR or the long BSR in accordance with a predetermined method. For example, in a case of the regular BSR and the periodic BSR, the terminal apparatus 10 may select either the short BSR or the long BSR as follows. In a case where more than one LCG has available data for transmission when the MAC PDU including the BSR is built, the terminal apparatus 10 transmits a long BSR for all the LCGs which have available data. Otherwise, the terminal apparatus 10 transmits a short BSR.

In the case of the regular BSR and the periodic BSR, for a MAC entity configured with logicalChannelGroup-IABExt IE by an upper layer, the terminal apparatus 10 may select either the short BSR or the long BSR as follows. When more than one LCG has available data for transmission, and a maximum value of LCG IDs of the configured LCGs is 7 or lower, the terminal apparatus 10 transmits a long BSR for all the LCGs which have available data. When more than one LCG has available data for transmission, and a maximum value of LCG IDs of the configured LCGs is greater than 7, the terminal apparatus 10 transmits an Extended long BSR for all the LCGs which have available data. When one or more LCGs have available data for transmission, the terminal apparatus 10 transmits an Extended short BSR.

In a case of the padding BSR, the terminal apparatus 10 may transmit one of the following BSRs in accordance with a condition to be satisfied.

- Short BSR
- Long BSR
- Short Truncated BSR
- Long Truncated BSR
- Extended short Truncated BSR
- Extended long Truncated BSR

1.5. Extended Reality (eXtended Reality, XR)

Characteristics of traffic generated in XR will be described. In XR, a plurality of types of data (video data, voice data, user data, control data, and the like) are transmitted and received in parallel. A plurality of data streams corresponding to the data segments have different traffic characteristics and quality of service (QoS) requirements.

At timings of transmission and reception of the data, time shifts expressed as jitter, variability, and fluctuation may occur due to factors such as encoding of a video and audio and network latency.

Reference Literature 1 describes that the following definitions can be introduced for transmission and reception in XR.

[Reference Literature 1] 3GPP TR 23.700-60 V1.1.0 (2022-09)

PDU set: a set of PDUs including one or more PDUs carrying a payload of one unit of information generated at an application level. The application level corresponds, for example, to a frame or a video slice in an XR service.

Data burst: a set of datamultiple PDUs generated and sent by an application in a short period of time.

Furthermore, for XR, requirements of a packet delay budget (PDB) as the QoS requirements have been studied. The PDB is an upper bound of packet delay time allowed between the terminal apparatus 10 and the UPF. Note that Reference Literature 1 also describes that the following new QoS parameters can be introduced.

PDU-set delay budget (PSDB): an upper bound of PDU-set delay time allowed between the terminal apparatus 10 and the UPF.

PDU-set error rate (PSER): an upper bound of an error rate calculated between a PDU set processed by a sender, and all the PDUs in a PDU set that has not successfully delivered to an upper layer of a corresponding receiver.

1.6. Extension of Buffer Status Reporting (BSR)

1.6.1. Basic Configuration

As described above, in the BSR described in NPL 2 and NPL 3, only one piece of information for data corresponding to one LCG can be provided in a notification to the base station apparatus. Specifically, the BSR only indicates a total amount of data available for one LCG. A small amount of the information provided in a notification to the base station apparatus 20 by using the BSR causes an issue that the base station apparatus fails to appropriately allocate a radio resource to the terminal apparatus.

In view of this, the present embodiment provides a BSR with extended data structure and/or procedure. Specifically, the terminal apparatus 10 acquires or generates first information related to first data included in certain data. The terminal apparatus 10 acquires or generates second information related to second data included in the certain data. The terminal apparatus 10 transmits the first information and the second information as the BSR.

The certain data means a unit of data to be reported in the BSR. Hereinafter, to distinguish from the first data the second data, the certain data is referred to as "data to be reported" or a "unit of data to be reported." According to this configuration, the terminal apparatus 10 can transmit, to the base station apparatus 20, two pieces of information (in other words, the first information and the second information) for data to be reported. An amount of the information provided in a notification to the base station apparatus 20 by using the BSR is larger than that of the techniques described in NPL 2 and NPL 3.

The terminal apparatus 10 may judge or classify the first data and the second data in the data to be reported, based on a priority. Details of the priority will be described below. For example, the base station apparatus 20 may configure the priority described below for the terminal apparatus 10. The base station apparatus 20 may transmit an RRC message including information related to the priority. The terminal apparatus 10 may determine the priority, based on the information related to the priority included in the RRC message. For example, the terminal apparatus 10 may determine a priority for each of one or a plurality of LCHs. The terminal apparatus 10 may determine a priority for each of one or a plurality of LCGs. For example, the terminal apparatus 10 may determine a priority for certain one LCH and determine a priority for an LCG to which the LCH belongs. In this configuration, the first data may be data having a priority higher than that of the second data. The second data may include data having a priority lower than that of the first data. For example, the second data may be all of the data to be reported. The second data may be data obtained by excluding the first data from all of the data to be reported.

As the priority, a QoS requirement may be used, for example. For example, the terminal apparatus 10 may judge the first data by using, as the priority, a temporal restriction or requirement. The first data may be data on which the temporal restriction or requirement is imposed. The data on which the temporal restriction or requirement is imposed are data to be transmitted sooner, and the data are data having a higher priority. Such data may be referred to as urgent data. Accordingly, the first data may be data having urgency. Note that the second data may include data on which the temporal restriction or requirement is not imposed.

More specifically, the first data may be data satisfying a condition related to a delay. For example, data with a delay in transmission are data to be transmitted sooner, and the data are data having a higher priority. For example, the first data may be data of which a remaining time to complete data transmission is below a certain first threshold Th1. The first data may be data of which a remaining time to reach a PDB is below a certain second threshold Th2. The first data may be data of which a remaining time to reach a PSDB is below a certain third threshold Th3. Note that the second data may include data not satisfying the condition related to a delay.

In another example, the first data may be data on which a restriction or requirement related to a temporal change in latency, such as jitter, is imposed. In still another example, the first data may be data on which a restriction or requirement related to a transmission rate is imposed.

The first information may be information related to a size (in other words, an amount) of the first data. The first information may be an index indicating the number of bytes of the first data. In another example, the first information may be information related to a delay of the first data. The first information may be information related to a delay time of the first data. Furthermore, the first information may include information related to a size of the first data and information related to a delay time of the first data.

The second information may be information related to a size (in other words, an amount) of the second data. The second information may be an index indicating the number of bytes of the second data. In another example, the second information may be information related to delay of the second data. The second information may be information related to a delay time of the second data. Furthermore, the second information may include information related to a size of the second data and information related to a delay time of the second data.

The unit of data to be reported may be data corresponding to one LCG. The one LCG may include one or a plurality of logical channels (in other words, data corresponding to one or a plurality of logical channels). In this configuration, the first data may be part of data available for one OCG. The second data may be part or all of the data available for the one LCG. For example, in this configuration, the first data may be data available in one or a plurality of logical channels or all the logical channels belonging to one LCG (or part of the data). For example, in this configuration, the second data may be data available in one or a plurality of logical channels or all the logical channels belonging to the one LCG (or part of the data).

The unit of data to be reported may be data corresponding to one logical channel. In this configuration, the first data may be part of data available for one logical channel. The second data may be part or all of the data available for one logic channel.

The unit of data to be reported may be data corresponding to one PDU set. In this configuration, the first data may be part of data available for one PDU set. The second data may be part or all of the data available for one PDU set. Note that the unit of data to be reported may be data corresponding to a plurality of PDU sets. For example, in this configuration, the first data may be data available in one or a plurality of PDUs (or PDU sets) or all the PDUs (or PDU sets) belonging to one PDU set (or part of the data). For example, in this configuration, the second data may be data available in one or a plurality of PDUs (or PDU sets) or all the PDUs (or PDU sets) belonging to the one PDU set (or part of the data).

The unit of data to be reported may be data corresponding to one data burst. In this configuration, the first data may be part of data available for one data burst. The second data may be part or all of the data available for the one data burst. Note that the unit of data to be reported may be data corresponding to a plurality of data bursts. For example, in this configuration, the first data may be data available in one or a plurality of data (or data bursts) or all the data (or data bursts) belonging to one data burst (or part of the data). For example, in this configuration, the second data may be data available in one or a plurality of data (or data bursts) or all the data (or data bursts) belonging to the one data burst (or part of the data).

1.6.2. Concrete Example

An example in which the terminal apparatus 10 transmits a long BSR will be described below. In the present example, the unit of data to be reported is data corresponding to one LCG.

The first data is data satisfying a condition related to a delay, from among available data in one LCG. The controller 110 of the terminal apparatus 10 judges, as the first data, data satisfying at least one of the following conditions (b1) to (b3), from among data available for one LCG.

(b1) A remaining time to complete data transmission is below the certain first threshold Th1.
(b2) A remaining time to reach a PDB is below the certain second threshold Th2.
(b3) A remaining time to reach a PSDB is below the certain third threshold Th3.

The first information is information related to a size of the first data. The first information is an index indicating the number of bytes of the first data, as in the example of the BSR described above.

The second data is all of data available for one LCG. The second information is information related to a total size of the data available for the one LCG. The second information is an index indicating the number of bytes of the second data, as in the example of the BSR described above.

The long BSR may include a first BSR including the first information and a second BSR including the second information. For example, for a format of certain one BSR (for example, a format of the long BSR), a first BS size field (in other words, the first information) for identifying a total amount of the available first data and/or a second BS size field (in other words, the second information) for identifying a total amount of the available second data may be defined. For example, the total amount of the available first data may correspond to a total amount of the available first data in the data to be reported. For example, the total amount of the available second data may correspond to a total amount of the available second data in the data to be reported. For example, the total amount of the available first data and/or the total amount of the available second data may be identified (determined or calculated) based on a data volume calculation procedure.

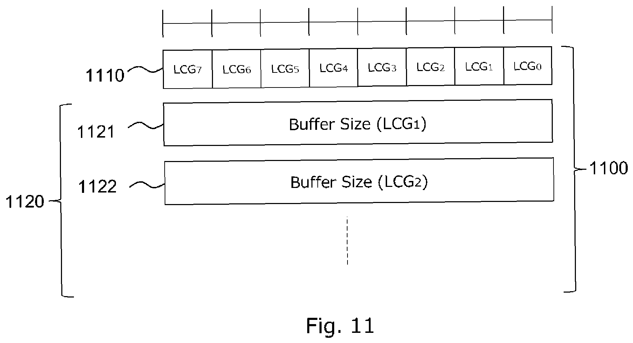

As shown in Fig. 11, the first BSR 1100 includes a first field 1110 and a second field 1120. The first field 1110 is the same as the LCG field 1010 in Fig. 10. The first field 1110 indicates whether information corresponding to LCGi is present in the second field 1120.

The number of fields included in the second field 1120 is variable depending on a value of the first field 1110. Assume that in the first field 1110 in Fig. 11, a bit corresponding to $LCG_1$ and a bit corresponding to $LCG_2$ are 1 and 1, respectively. Accordingly, the second field 1120 includes a field 1121 corresponding to $LCG_1$ and a field 1122 corresponding to $LCG_2$. The field 1121 corresponds to first information related to $LCG_1$, and indicates the number of bytes of first data in $LCG_1$. The field 1122 corresponds to first information related to $LCG_2$, and indicates the number of bytes of first data in $LCG_2$. Note that a bit corresponding to $LCG_0$ is assumed to be 0 in Fig. 11, and thus a buffer size field 1120 does not include a field corresponding to $LCG_0$.

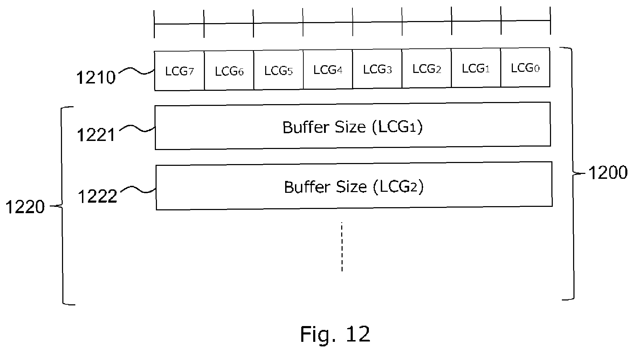

As shown in Fig. 12, the second BSR 1200 includes a first field 1210 and a second field 1220. The first field 1210 is the same as the LCG field 1010 in Fig. 10. The first field 1210 indicates whether information corresponding to LCGi is present in the second field 1220.

The number of fields included in the second field 1220 is variable depending on a value of the first field 1210. Assume that in the first field 1210 in Fig. 12, a bit corresponding to $LCG_1$ and a bit corresponding to $LCG_2$ are 1 and 1, respectively. Accordingly, the second field 1220 includes a field 1221 corresponding to $LCG_1$ and a field 1222 corresponding to $LCG_2$. The field 1221 corresponds to second information related to $LCG_1$, and indicates the number of bytes of second data in $LCG_1$. The field 1222 corresponds to second information related to $LCG_2$, and indicates the number of bytes of second data in $LCG_2$. Note that a bit corresponding to $LCG_0$ is assumed to be 0 in Fig. 12, and thus a buffer size field 1220 does not include a field corresponding to $LCG_0$.

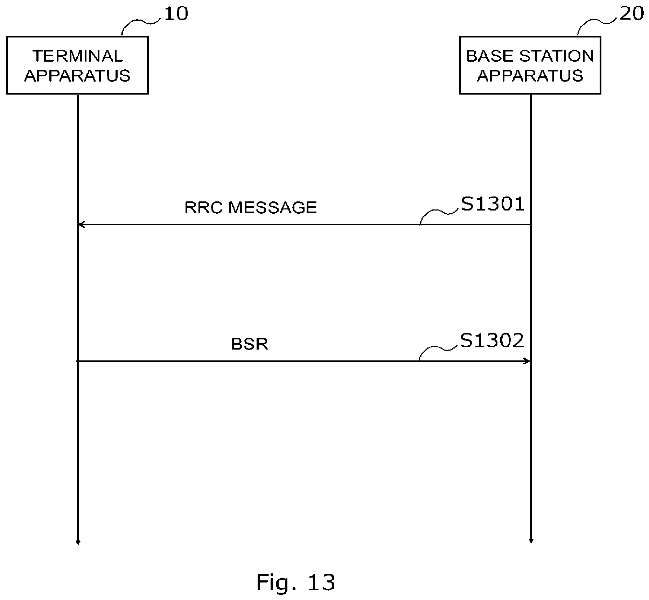

Next, respective operations of the terminal apparatus 10 and the base station apparatus 20 according to the present embodiment will be described. As shown in Fig. 13, the communicator 220 of the base station apparatus 20 transmits an RRC message to the terminal apparatus 10 (S1301). The RRC message may be an RRC reconfiguration (RRCReconfiguration) message including a parameter for a BSR. The controller 110 of the terminal apparatus 10 generates the BSR, based on the parameter for the BSR included in the RRC message. The communicator 120 of the terminal apparatus 10 transmits the BSR (S1302).

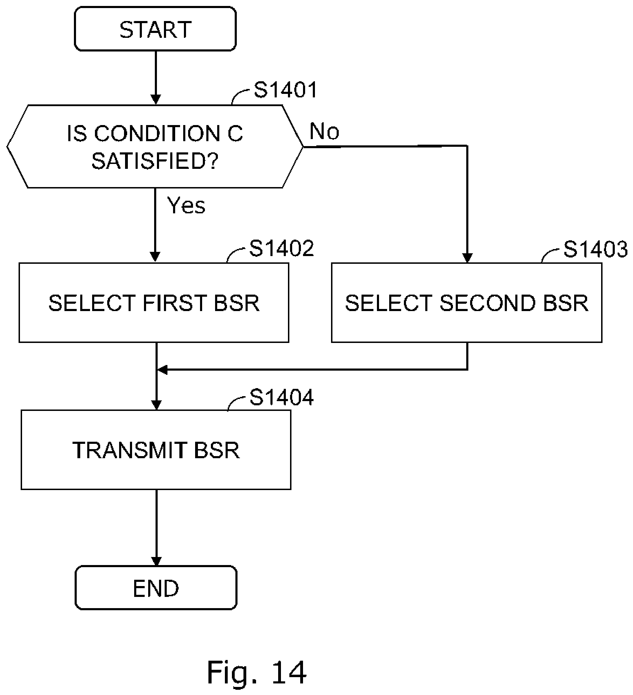

Specifically, after receiving the RRC message, the terminal apparatus 10 executes a flow shown in Fig. 14. For example, the controller 110 may start or trigger the flow shown in Fig. 14 in a case where one of the conditions (a1) to (a4) is satisfied. In another example, the controller 110 may start or trigger the flow shown in Fig. 14 in a case where data satisfying at least one of the conditions (b1) to (b3) in addition to or in place of the conditions (a1) to (a4) is present.

After starting the flow shown in Fig. 14, the controller 110 judges whether a certain condition C is satisfied (S1401). The condition C is a combination of one or two selected from the following conditions (c1) to (c2).

(c1) The terminal apparatus 10 receives first configuration information from the base station apparatus 20, and the first configuration information indicates transmission of the first information.

(c2) The first data is present in uplink data. In other words, data satisfying at least one of the conditions (b1) to (b3) is present.

The first configuration information is explicit information indicating transmission of the first information or implicit information indicating transmission of the first information. In the present example, the first configuration information may be explicit information indicating transmission of the first BSR 1100 or implicit information indicating transmission of the first BSR 1100. The controller 110 selects that, in accordance with the first configuration information, the first information (in other words, the first BSR 1100) is to be transmitted as the BSR. An example of the explicit information and an example of the implicit information will be described below.

- Explicit information

The first configuration information may be "information indicating whether to transmit the first information." The information indicating whether to transmit the first information may indicate "the first information to be transmitted" or "the first information not to be transmitted." The first configuration information may be a flag indicating "the first information to be transmitted" or "the first information not to be transmitted." In the present example, the first configuration information may be "information indicating whether to transmit the first BSR 1100." The information indicating whether to transmit the first BSR 1100 may indicate "the first BSR 1100 to be transmitted" or "the first BSR 1100 not to be transmitted." The first configuration information may be a flag indicating "the first BSR 1100 to be transmitted" or "the first BSR 1100 not to be transmitted."

- Implicit information

The first configuration information may be information on a condition related to a delay. The first configuration information may be at least one of the first threshold Th1, the second threshold Th2, and the third threshold Th3. At least one of the thresholds is a condition for judging the first data. Accordingly, at least one of the thresholds may implicitly indicate transmission of the first information. Note that, in a case where the controller 110 receives at least one of the thresholds as the first configuration information, the controller 110 may judge the first data, based on at least one of the thresholds. For example, the controller 110 may classify, as the first data, data satisfying at least one of the conditions (b1) to (b3).

The communicator 220 of the base station apparatus 20 may transmit, to the terminal apparatus 10, an RRC message including the first configuration information. The first configuration information may be configured for a MAC cell group. For example, the first configuration information may be configured as a new element of the BSR-config IE. The first configuration information may be configured for a logical channel. For example, the first configuration information may be configured as a new element of the LogicalChannelConfig IE. The first configuration information may be configured for an LCG. For example, the first configuration information may be configured as a new element of the logicalChannelGroup IE. The base station apparatus 20 may transmit, to the terminal apparatus 10, system information (SI, such as SIB1 and/or SIB other than SIB1) including the first configuration information. The base station apparatus 20 may transmit, to the terminal apparatus 10, DCI including the first configuration information.

Referring back to the description of the flow in Fig. 14. In a case where the condition C is satisfied, the controller 110 selects the first BSR 1100 (S1402). In this case, the controller 110 judges the first data and acquires the first information, for each LCG. The controller 110 generates the first BSR 1100 including the first information. The communicator 120 transmits, to the base station apparatus 20, the first BSR 1100 generated in such a manner as that described above (S1404). The controller 210 of the base station apparatus 20 allocates, based on the first BSR 1100, a radio resource to the terminal apparatus 10. For example, the controller 210 may preferentially allocate a radio resource to an LCG for which the first information indicates a larger size. In a case where the base station apparatus 20 has received BSRs from a plurality of terminal apparatuses 10, the controller 210 may preferentially allocate a radio resource to the terminal apparatus 10 that has transmitted the first BSR 1100.

In a case where the condition C is not satisfied, the controller 110 selects the second BSR 1200 (S1403). In this case, the controller 110 judges the second data and acquires the second information, for each LCG. The controller 110 generates the second BSR 1200 including the second information. The communicator 120 transmits, to the base station apparatus 20, the second BSR 1200 generated in such a manner as that described above (S1404). The base station apparatus 20 allocates, based on the second BSR 1200, a radio resource to the terminal apparatus 10.

According to the configuration, the terminal apparatus 10 can transmit, to the base station apparatus 20, the first BSR 1100 including the first information and the second BSR 1200 including the second information. The terminal apparatus 10 can transmit, to the base station apparatus 20, the two pieces of information (in other words, the first information related to the first data and the second information related to the second data) for the data to be reported (in other words, the data corresponding to one LCH). Accordingly, the terminal apparatus 10 can notify, in a BSR procedure, the base station apparatus 20 of more information than the techniques described in NPL 2 and NPL 3. In the present example, the first information indicates a size of the data satisfying the condition related to a delay, from among the data available for the one LCG. Accordingly, the base station apparatus 20 can preferentially allocate a radio resource to an LCG for which the first information indicates a larger size. In this manner, the base station apparatus 20 can appropriately allocate a radio resource to the terminal apparatus 10.

- Alteration 1-1

The MAC PDU including the BSR may include identification information for identifying whether the BSR is the first BSR 1100 or the second BSR 1200. For example, the MAC subheader includes an LCID or eLCID value (in other words, a code point). Respective LCID or eLCID values corresponding to the first BSR 1100 and the second BSR 1200 may be defined. In this configuration, in a case where the first BSR 1100 is transmitted, the MAC subheader includes an LCID or eLCID value corresponding to the first BSR 1100. In a case where the second BSR 1200 is transmitted, the MAC subheader includes an LCID or eLCID value corresponding to the second BSR 1200.

In another example, the CE of the MAC PDU including the BSR may include the identification information. For example, the first BSR 1100 may further include a field including identification information indicating that the BSR is the first BSR 1100. The second BSR 1200 may further include a field including identification information indicating that the BSR is the second BSR 1200.

- Alteration 1-2

The configuration of the first BSR 1100 and the configuration of the second BSR 1200 may be changed as follows. For example, the first BSR 1100 may include first information per logical channel, and the second BSR 1200 may include second information per logical channel. In this configuration, the first field 1110 of the first BSR 1100 indicates whether a second field 1120 is present for each of logical channels LCHi. The second field 1120 of the first BSR 1100 includes first information corresponding to the logical channel LCHi. Likewise, the first field 1210 of the second BSR 1200 indicates whether a second field 1220 is present for each of the logical channels LCHi. The second field 1220 includes second information corresponding to the logical channel LCHi.

The first BSR 1100 may include first information per PDU set, and the second BSR 1200 may include second information per PDU set. In this configuration, the first field 1110 of the first BSR 1100 indicates whether a second field 1120 is present for each of PDU sets PDUSi. The second field 1120 of the first BSR 1100 includes first information corresponding to the PDU set PDUSi. Likewise, the first field 1210 of the second BSR 1200 indicates whether a second field 1220 is present for each of the PDU sets PDUSi. The second field 1220 includes second information corresponding to the PDU set PDUSi. Note that the first BSR 1100 may include first information for each one or more PDU sets, and the second BSR 1200 may include second information for each one or more PDU sets.

The first BSR 1100 may include first information per data burst, and the second BSR 1200 may include second information per data burst. In this configuration, the first field 1110 of the first BSR 1100 indicates whether a second field 1120 is present for each of data bursts DBi. The second field 1120 of the first BSR 1100 includes first information corresponding to the data burst DBi. Likewise, the first field 1210 of the second BSR 1200 indicates whether a second field 1220 is present for each of the data bursts DBi. The second field 1220 includes second information corresponding to the data burst DBi. Note that the first BSR 1100 may include first information for each one or more data bursts, and the second BSR 1200 may include second information per data burst.

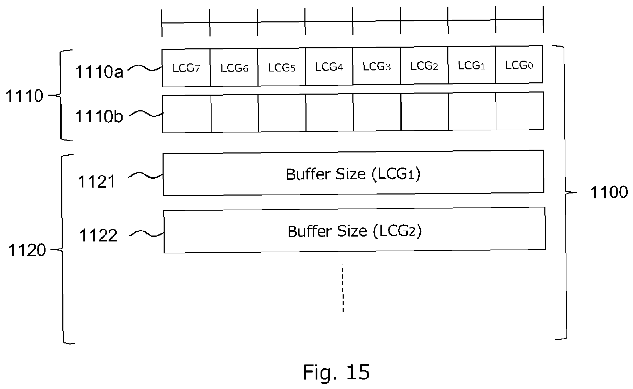

In the present alteration, the first field 1110 of the first BSR 1100 may include an additional field. As shown in Fig. 15, the first field 1110 may include a field 1110a and/or a field 1110b. In other words, the first field 1110 may include both of the fields 1110a and 1110b, or may include one of the fields 1110a and 1110b. The field 1110a is a field corresponding to 8 LCGi. The field 1110b may be a field corresponding to logical channels LCHi, PDU sets PDUSi, or data bursts DBi.

In a configuration in which the first BSR 1100 includes first information per logical channel, the field 1110b may be a field corresponding to logical channels LCHi. The field 1110b may indicate whether a second field 1120 is present for each of the logical channels LCHi.

In a configuration in which the first BSR 1100 includes first information per PDU set, the field 1110b may be a field corresponding to PDU sets PDUSi. The field 1110b may indicate whether a second field 1120 is present for each of the PDU sets PDUSi.

In a configuration in which the first BSR 1100 includes first information per data burst, the field 1110b may be a field corresponding to data bursts DBi. The field 1110b may indicate whether a second field 1120 is present for each of the data bursts DBi. Note that the first field 1210 of the second BSR 1200 may likewise include an additional field.

- Alteration 1-3

The terminal apparatus 10 may receive, from the base station apparatus 20, second configuration information indicating a type of the data to be reported. In this configuration, the terminal apparatus 10 selects, based on the second configuration information, a type of the data to be reported. The terminal apparatus 10 may transmit, for the selected data, the first BSR 1100 and the second BSR 1200.

The base station apparatus 20 may transmit, to the terminal apparatus 10, an RRC message including the second configuration information. For example, the RRC message in Step S1301 may include the second configuration information. The base station apparatus 20 may transmit, to the terminal apparatus 10, system information (SI, such as SIB1 and/or SIB other than SIB1) including the second configuration information. The base station apparatus 20 may transmit, to the terminal apparatus 10, DCI including the second configuration information.

The second configuration information may be explicit information indicating a type of the data to be reported or implicit information indicating a type of the data to be reported. An example of the explicit information and an example of the implicit information will be described below.

- Explicit information

The second configuration information may be information indicating one of an LCG, a logical channel, a PDU set, and a data burst. For example, in a case where the second configuration information indicates an LCG, the terminal apparatus 10 may transmit the first BSR 1100 including first information for each LCG and the second BSR 1200 including second information for each LCG. In a case where the second configuration information indicates a logical channel, the terminal apparatus 10 may transmit the first BSR 1100 including first information for logical channel and the second BSR 1200 including second information for logical channel. In a case where the second configuration information indicates a PDU set, the terminal apparatus 10 may transmit the first BSR 1100 including first information for each PDU set and the second BSR 1200 including the second information for each PDU set. In a case where the second configuration information indicates a data burst, the terminal apparatus 10 may transmit the first BSR 1100 including first information for each data burst and the second BSR 1200 including second information for each data burst.

- Implicit information

The second configuration information may be the first configuration information. In this configuration, the terminal apparatus 10 may select a type of the data to be reported, in accordance with an IE configured with the first configuration information.

A case where the first configuration information is configured for a MAC cell group may indicate that a unit of the data to be reported is data corresponding to one LCG. For example, the first configuration information may be configured in a MAC cell group-related IE included in an RRC message. An example of such an IE includes a BSR-config IE. As another example, a case where the first configuration information is configured for an LCG may indicate that a unit of the data to be reported is data corresponding to one LCG. For example, the first configuration information may be configured for an IE associated with an LCG. An example of such an IE includes a logicalChannelGroup IE. In one of the cases, the terminal apparatus 10 may transmit the first BSR 1100 including first information for each LCG and the second BSR 1200 including second information for each LCG.

A case where the first configuration information is configured for a logical channel may indicate that a unit of the data to be reported is data corresponding to one logical channel. For example, the first configuration information may be configured in a logical channel-related IE included in an RRC message. An example of such an IE includes a LogicalChannelConfig IE. In this case, the terminal apparatus 10 may transmit the first BSR 1100 including first information for each logical channel and the second BSR 1200 including second information for each logical channel.

A case where the first configuration information is configured for a PDU set may indicate that a unit of the data to be reported is data corresponding to one PDU set. For example, the first configuration information may be configured in a PDU set-related IE included in an RRC message. In this case, the terminal apparatus 10 may transmit the first BSR 1100 including first information for each PDU set and the second BSR 1200 including second information for each PDU set.

A case where the first configuration information is configured for a data burst may indicate that a unit of the data to be reported is data corresponding to one data burst. For example, the first configuration information may be configured in a data burst-related IE included in an RRC message. In this case, the terminal apparatus 10 may transmit the first BSR 1100 including first information for each data burst and the second BSR 1200 including second information for each data burst.

- Alteration 1-4

Based on a type of the data to be reported and a type of the BSR, an LCID or eLCID value (in other words, a code point) may be defined. For example, as LCID or eLCID values, values corresponding to the following BSRs may be defined. The MAC subheader may include a corresponding LCID or eLCID value, in accordance with a type of the data to be reported and a type of the BSR.

- The BSR is the first BSR 1100, and a unit of the data to be reported is data corresponding to one LCG.
- The BSR is the second BSR 1200, and a unit of the data to be reported is data corresponding to one LCG.
- The BSR is the first BSR 1100, and a unit of the data to be reported is data corresponding to one logical channel.
- The BSR is the second BSR 1200, and a unit of the data to be reported is data corresponding to one logical channel.
- The BSR is the first BSR 1100, and a unit of the data to be reported is data corresponding to one or more PDU sets.
- The BSR is the second BSR 1200, and a unit of the data to be reported is data corresponding to one or more PDU sets.
- The BSR is the first BSR 1100, and a unit of the data to be reported is data corresponding to one or more data bursts.
- The BSR is the second BSR 1200, and a unit of the data to be reported is data corresponding to one or more data bursts.

- Alteration 1-5

The PDU set may be associated with one or more logical channels. For example, one or more logical channels may be configured in a PDU set-related IE included in an RRC message. In this case, the terminal apparatus 10 may transmit the first BSR 1100 and the second BSR 1200 for one or more LCGs to which the one or more logical channels belong. In other words, the terminal apparatus 10 may transmit the first BSR 1100 including first information for the one or more LCGs and the second BSR 1200 including second information for the one or more LCGs.

The data burst may be associated with one or more logical channels. For example, one or more logical channels may be configured in a data burst-related IE included in an RRC message. In this case, the terminal apparatus 10 may transmit the first BSR 1100 and the second BSR 1200 for one or more LCGs to which the one or more logical channels belong. In other words, the terminal apparatus 10 may transmit the first BSR 1100 including first information for the one or more LCGs and the second BSR 1200 including second information for the one or more LCGs.

- Alteration 1-6

The terminal apparatus 10 may transmit the first BSR 1100 and the second BSR 1200 in a Logical Channel Prioritization (LCP) procedure. In the LCP, a priority of the first BSR 1100 may be configured to be higher than a priority of the second BSR 1200. The first BSR 1100 may be configured to have the highest priority, out of a plurality of BSRs configured with priorities in LCP. In other words, a MAC CE for the first BSR may be prioritized over a MAC CE for the second BSR. The MAC CE for the first BSR may be prioritized over a MAC CE for a BSR other than a BSR included in padding.

- Alteration 1-7

The present embodiment describes the configuration of the long BSR, but is not limited to this example. The present embodiment and an alteration thereof may be applied to a short BSR. For example, the short BSR may include a first BSR including first information associated with first data and a second BSR including second information associated with second data. In this case, when the terminal apparatus 10 transmits the first BSR, the second portion 920 in Fig. 9 includes the first information. When the terminal apparatus 10 transmits the second BSR, the second portion 920 in Fig. 9 includes the second information. The controller 110 may execute the flow in Fig. 14 and select the first BSR or the second BSR for the short BSR. Furthermore, the present embodiment and the alteration thereof may be applied to a Truncated format, an Extended format, a Pre-emptive format, and formats of combinations of these.

2. Second Embodiment

Next, a configuration of a second embodiment will be described. Only parts of the second embodiment different from the first embodiment will be described below, and description of the same parts thereof as the first embodiment will be omitted. Accordingly, the configuration of the first embodiment and Alterations 1-1 to 1-7 can be applied to a configuration described in the present embodiment unless these configurations are consistent with each other.

In the present embodiment, the first BSR includes first information and second information. A configuration of the second BSR is the same as that of the first embodiment.

An example in which the terminal apparatus 10 transmits a long BSR will be described below. In the present example, the unit of data to be reported is data corresponding to one LCG. Respective configurations of the first data and the second data are the same as those of the first embodiment. Furthermore, respective configurations of the first information and the second information are the same as those of the first embodiment.

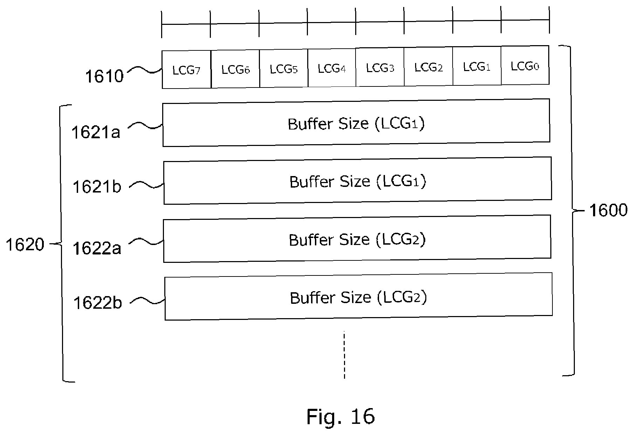

As shown in Fig. 16, a first BSR 1600 includes a first field 1610 and a second field 1620.

The first field 1610 is the same as the LCG field 1010 in Fig. 10. The first field 1610 indicates whether information corresponding to LCGi is present in the second field 1620. In the first field 1610, a bit corresponding to LCGi being 1 indicates that the second field 1620 includes first information and second information corresponding to LCGi.

The number of fields included in the second field 1620 is variable depending on a value of the first field 1610. Assume that in the first field 1610, a bit corresponding to $LCG_1$ and a bit corresponding to $LCG_2$ are 1 and 1, respectively. Accordingly, the second field 1620 includes two fields 1621a and 1621b corresponding to $LCG_1$ and two fields 1622a and 1622b corresponding to $LCG_2$.

The field 1621a corresponds to first information related to $LCG_1$, and indicates the number of bytes of first data in $LCG_1$. The field 1621b corresponds to second information related to $LCG_1$, and indicates the number of bytes of second data in $LCG_1$.

The field 1622a corresponds to first information related to $LCG_2$, and indicates the number of bytes of first data in $LCG_2$. The field 1622b corresponds to second information related to $LCG_2$, and indicates the number of bytes of second data in $LCG_2$. Note that a bit corresponding to $LCG_0$ is assumed to be 0 in Fig. 16, and thus a buffer size field 1620 does not include a field corresponding to $LCG_0$.

In the present embodiment, the processing flow from Step S1402 to Step S1404 in the flow in Fig. 14 is changed as follows. When the condition C is satisfied, the controller 110 selects the first BSR 1600 (S1402). In this case, the controller 110 judges the first data and acquires the first information, for each LCG. Furthermore, the controller 110 judges the second data and acquires the second information, for each LCG. The controller 110 generates the first BSR 1600 including the first information and the second information. The communicator 120 transmits, to the base station apparatus 20, the first BSR 1600 generated in such a manner as that described above (S1404).

The controller 210 of the base station apparatus 20 allocates, based on the first BSR 1600, a radio resource to the terminal apparatus 10. For example, the controller 210 may preferentially allocate a radio resource to an LCG for which the first information indicates a larger size. When the base station apparatus 20 has received BSRs from a plurality of terminal apparatuses 10, the controller 210 may preferentially allocate a radio resource to the terminal apparatus 10 that has transmitted the first BSR 1600.

According to the configuration, the terminal apparatus 10 can transmit the first BSR 1600 including the first information and the second information. An amount of the information included in the first BSR 1600 is larger than that of the first embodiment. Accordingly, the base station apparatus 20 can appropriately allocate a radio resource to the terminal apparatus 10.

## 3. Third Embodiment

Next, a configuration of a third embodiment will be described. Only parts of the third embodiment different from the first embodiment will be described below, and description of the same parts thereof as the first embodiment will be omitted. Accordingly, the configuration of the first embodiment and Alterations 1-1 to 1-7 can be applied to a configuration described in the present embodiment unless these configurations are consistent with each other.

In the present embodiment, the first BSR includes first information and second information. Specifically, the terminal apparatus 10 adds the first information to the first BSR in accordance with notification from the base station apparatus 20. A configuration of the second BSR is the same as that of the first embodiment.

An example in which the terminal apparatus 10 transmits a long BSR will be described below. In the present example, the unit of data to be reported is data corresponding to one LCG. Respective configurations of the first data and the second data are the same as those of the first embodiment. Furthermore, respective configurations of the first information and the second information are the same as those of the first embodiment.

The terminal apparatus 10 receives first configuration information from the base station apparatus 20. As described above, the terminal apparatus 10 may receive, from the base station apparatus 20, an RRC message including the first configuration information. The terminal apparatus 10 may receive, from the base station apparatus 20, system information (SI, such as SIB 1 and/or SIB other than SIB 1) including the first configuration information. The terminal apparatus 10 may receive, from the base station apparatus 20, DCI including the first configuration information.

For example, the first configuration information may be configured in an LCG-related IE included in an RRC message. This indicates that the first information is transmitted for a corresponding LCG. Assume hereinafter that the first configuration information is configured only for $LCG_1$.

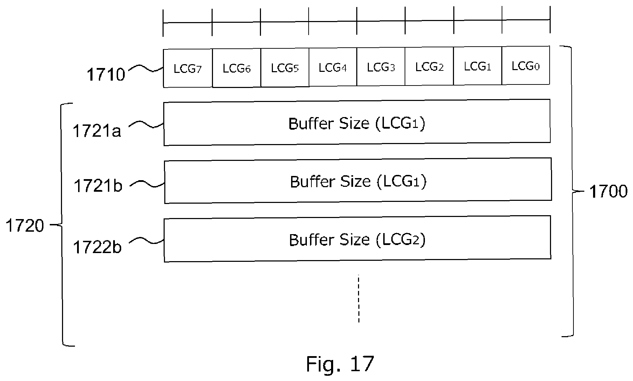

As shown in Fig. 17, a first BSR 1700 includes a first field 1710 and a second field 1720.

The first field 1710 is the same as the LCG field 1010 in Fig. 10. The first field 1710 indicates whether information corresponding to LCGi is present in the second field 1720.

The number of fields included in the second field 1720 is variable depending on a value of the first field 1710 and the first configuration information. Assume that in the first field 1710, a bit corresponding to $LCG_1$ and a bit corresponding to $LCG_2$ are 1 and 1, respectively.

A bit corresponding to $LCG_1$ of the first field 1710 is 1, and the first configuration information is configured for $LCG_1$. This means that the second field 1720 includes, for $LCG_1$, both first information and second information. Accordingly, the second field 1720 includes two fields 1721a and 1721b corresponding to $LCG_1$.

A bit corresponding to $LCG_2$ of the first field 1710 is 1, but the first configuration information is not configured for $LCG_2$. This means that the second field 1720 includes, for $LCG_2$, only second information. Accordingly, the second field 1720 includes one field 1722b corresponding to $LCG_2$.

The field 1721a corresponds to first information

related to $LCG_1$, and indicates the number of bytes of first data in $LCG_1$. The field 1721b corresponds to second information related to $LCG_1$, and indicates the number of bytes of second data in $LCG_1$.

The field 1722b corresponds to second information related to $LCG_2$, and indicates the number of bytes of second data in $LCG_2$. Note that a bit corresponding to $LCG_0$ is assumed to be 0 in Fig. 17, and thus a buffer size field 1720 does not include a field corresponding to $LCG_0$.

In the present embodiment, the processing flow from Step S1402 to Step S1404 in the flow in Fig. 14 is changed as follows. Assume that condition (c1) of the condition C is satisfied. In this case, the controller 110 selects the first BSR 1700 (S1402). The controller 110 judges the first data and acquires the first information, for only an LCG configured with the first configuration information. Furthermore, the controller 110 judges the second data and acquires the second information, for each LCG. The controller 110 generates the first BSR 1700 including the first information and the second information. The first BSR 1700 includes both of the first information and the second information only for an LCG configured with the first configuration information, and includes the second information for an LCG not configured with the first configuration information. The communicator 120 transmits, to the base station apparatus 20, the first BSR 1700 generated in such a manner as that described above (S1404).

Assume that condition (c2) of the condition C is satisfied. In this case, the controller 110 selects the first BSR 1700 (S1402). The controller 110 acquires the first information only for an LCG for which the first data is present. Furthermore, the controller 110 judges the second data and acquires the second information, for each LCG. The controller 110 generates the first BSR 1700 including the first information and the second information. The first BSR 1700 includes both of the first information and the second information only for an LCG for which the first data is present, and includes the second information for an LCG for which the first data is absent. The communicator 120 transmits, to the base station apparatus 20, the first BSR 1700 generated in such a manner as that described above (S1404).

The controller 210 of the base station apparatus 20 allocates, based on the first BSR 1700, a radio resource to the terminal apparatus 10. For example, the controller 210 may preferentially allocate a radio resource to an LCG for which the first information has been reported. In a case where the first BSR 1700 includes a plurality of pieces of first information, the controller 210 may preferentially allocate a radio resource to an LCG for which the first information indicates a larger size. In a case where the base station apparatus 20 has received BSRs from a plurality of terminal apparatuses 10, the controller 210 may preferentially allocate a radio resource to the terminal apparatus 10 that has transmitted the first BSR 1700.

According to the configuration, the terminal apparatus 10 can transmit the first BSR 1700 including the first information and the second information. The terminal apparatus 10 generates the first BSR 1700 such that the first BSR 1700 includes the first information corresponding to an LCG specified from the base station apparatus 20. In other words, the terminal apparatus 10 adds the first information to the first BSR 1700, only for the LCG specified from the base station apparatus 20. Accordingly, efficient BSR transmission can be provided.

- Alteration 3-1

The first configuration information may be configured for a logical channel. For example, the first configuration information may be configured in a logical channel-related IE included in an RRC message. In this case, the terminal apparatus 10 may add, to the first BSR 1700, the first information for an LCG to which the logical channel belongs.

The PDU set may be associated with one or more logical channels. For example, one or more logical channels may be configured in a PDU set-related IE included in an RRC message. In this case, the terminal apparatus 10 may add, to the first BSR 1700, the first information for one or more LCGs to which the one or more logical channels belong.

The data burst may be associated with one or more logical channels. For example, one or more logical channels may be configured in a data burst-related IE included in an RRC message. In this case, the terminal apparatus 10 may add, to the first BSR 1700, the first information for one or more LCGs to which the one or more logical channels belong.

4. Alteration

Although the present disclosure has been described in accordance with the embodiments, it is understood that the present disclosure is not limited to the embodiments and structures. The present disclosure also includes various alterations and variations within the scope of equivalents. Other combinations including one or more elements included in the embodiments are also included in the scope and spirit of the present disclosure.

Expressions such as words and phrases used in the embodiments are merely examples, and may be replaced with substantially the same or similar expressions. Particularly, since the technique according to the embodiments relates to technical specifications, the expressions in the embodiments may be replaced with substantially the same or similar expressions in the technical specifications (for example, the technical specifications cited in the Specification of the present application).

The information transmitted/received in the embodiments may be transmitted/received in the same or a different message or the same or a different element as or from that already described in the technical specifications, or may be transmitted/received in a new message or element to be defined. The information transmitted/received in the embodiments may be transmitted/received using a different layer and/or a different channel from that of the embodiments.

The means and/or the functions provided by the apparatuses described in the embodiments can be provided by software stored in a tangible memory apparatus and a computer that executes the software, the software only, hardware only, or a combination of those. For example, when one of the apparatuses is provided by an electronic circuit being hardware, it can be provided by a digital circuit including a number of logic circuits or an analog circuit.

The apparatuses described in the embodiments execute a program stored in a non-transitory tangible storage medium. Execution of the program causes execution of a method corresponding to the program.

5. Supplementary Notes

The whole or part of the embodiments and the alterations may be described as the following supplementary notes, but the disclosure is not limited to the contents of the following supplementary notes. The following expresses relationships in which a supplementary note that depends upon a plurality of supplementary notes depends upon a supplementary note that depends upon a plurality of supplementary notes. All of the dependency relationships of the supplementary notes expressed below are included in the embodiments.

(Supplementary Note 1)

A terminal apparatus (10) comprising:

a controller (110) configured to acquire first information related to first data included in certain data and second information related to second data included in the certain data; and
a communicator (120) configured to transmit, to a base station apparatus, the first information and the second information as buffer status reporting (BSR).

(Supplementary Note 2)

The terminal apparatus according to Supplementary Note 1, wherein

the controller is further configured to judge the first data and the second data, based on a priority, and
the first data is data having a priority higher than a priority of the second data.

(Supplementary Note 3)

The terminal apparatus according to Supplementary Note 2, wherein

the controller is further configured to use, as the priority, a temporal restriction or requirement, and the first data is data on which the temporal restriction or requirement is imposed.

(Supplementary Note 4)

The terminal apparatus according to Supplementary Note 3, wherein
the first data is data satisfying at least one of:

a condition that a remaining time to complete data transmission is below a first threshold;
a condition that a remaining time to reach a packet delay budget (PDB) is below a second threshold; and
a condition that a remaining time to reach a protocol data unit-set delay budget (PSDB) is below a third threshold.

(Supplementary Note 5)

The terminal apparatus according to any one of Supplementary Notes 2 to 4, wherein the second data include data having a priority lower than a priority of the first data.

(Supplementary Note 6)

The terminal apparatus according to Supplementary Note 5, wherein the second data is all of the certain data.

(Supplementary Note 7)

The terminal apparatus according to any one of Supplementary Notes 1 to 6, wherein

the first information includes information related to a size of the first data, and
the second information includes information related to a size of the second data.

(Supplementary Note 8)

The terminal apparatus according to any one of Supplementary Notes 1 to 7, wherein

the first information includes information related to a delay of the first data, and
the second information includes information related to a delay of the second data.

(Supplementary Note 9)

The terminal apparatus according to any one of Supplementary Notes 1 to 8, wherein

the communicator is further configured to receive, from the base station apparatus, configuration information indicating transmission of the first information, and
the controller is further configured to select that, in accordance with the configuration information, the first information is to be transmitted as the BSR.

(Supplementary Note 10)

The terminal apparatus according to Supplementary Note 9, wherein
the configuration information includes at least one of:

a first threshold related to a remaining time to complete data transmission;
a second threshold related to a packet delay budget (PDB); and
a third threshold related to a protocol data unit-set delay budget (PSDB).

(Supplementary Note 11)

The terminal apparatus according to Supplementary Note 10, wherein the controller is further configured to judge the first data, based on at least one of the first threshold, the second threshold, and the third threshold.

(Supplementary Note 12)

The terminal apparatus according to any one of Supplementary Notes 1 to 11, wherein

the BSR includes

a first BSR (1100) including the first information (1120), and
a second BSR (1200) including the second information (1220), and

the controller is further configured to select, as the BSR to be transmitted to the base station apparatus, either the first BSR or the second BSR.

(Supplementary Note 13)

The terminal apparatus according to any one of Supplementary Notes 1 to 11, wherein

the BSR includes

a first BSR (1100) including the first information (1121a, 1122a) and the second information (1121b, 1122b), and
a second BSR (1200) including the second information (1220), and

the controller is further configured to select, as the BSR to be transmitted to the base station apparatus, either the first BSR or the second BSR.

(Supplementary Note 14)

The terminal apparatus according to Supplementary Note 12 or 13, wherein

the controller is further configured to

select the first BSR in a case where a certain condition is satisfied, and
select the second BSR in a case where the certain condition is not satisfied, and

the certain condition is one or a combination of

a condition that configuration information received from the base station apparatus indicates transmission of the first information, and
a condition that the first data is present in uplink data.

(Supplementary Note 15)

The terminal apparatus according to Supplementary Note 12 or 13, wherein identification information for identifying whether the BSR is the first BSR or the second BSR is included in a header or a control element (CE) of a Medium Access Control Protocol Data Unit (MAC PDU) including the BSR.

(Supplementary Note 16)

The terminal apparatus according to Supplementary Note 13, wherein

the communicator is further configured to receive, from the base station apparatus, configuration information indicating transmission of the first information, and
the controller is further configured to generate the first BSR such that the first BSR includes the first information corresponding to the configuration information.

(Supplementary Note 17)

The terminal apparatus according to any one of Supplementary Notes 1 to 16, wherein

the certain data is a unit of data to be reported in the BSR, and
the certain data is

data corresponding to one logical channel,
data corresponding to one logical channel group (LCG),
data corresponding to one or more protocol data unit sets (PDU sets), or
data corresponding to one or more data bursts.

(Supplementary Note 18)

The terminal apparatus according to Supplementary Note 17, wherein

the communicator is further configured to receive, from the base station apparatus, configuration information indicating a type of the certain data, and
the controller is further configured to select, based on the configuration information, the type of the certain data.

(Supplementary Note 19)

A method of a terminal apparatus (10), the method comprising:

acquiring first information related to first data included in certain data and second information related to second data included in the certain data; and
transmitting, to a base station apparatus, the first information and the second information as buffer status reporting (BSR).

(Supplementary Note 20)

A program causing a processor (101) in a terminal apparatus (10) to execute:

acquiring first information related to first data included in certain data and second information related to second data included in the certain data; and
transmitting, to a base station apparatus, the first information and the second information as buffer status reporting (BSR).

(Supplementary Note 21)

A non-transitory tangible storage medium having recorded thereon a program causing a processor (101) in a terminal apparatus (10) to execute:

acquiring first information related to first data included in certain data and second information related to second data included in the certain data; and
transmitting, to a base station apparatus, the first information and the second information as buffer status reporting (BSR).

(Supplementary Note 22)

A base station apparatus (20) comprising:

a communicator (220) configured to receive, as buffer status reporting (BSR), first information related to first data included in certain data and second information related to second data included in the certain data from a terminal apparatus; and
a controller (210) configured to allocate, based on the BSR, a radio resource to the terminal apparatus.

(Supplementary Note 23)

The base station apparatus according to Supplementary Note 22, wherein

the first data and the second data are classified based on a priority, and
the first data is data having a priority higher than a priority of the second data.

(Supplementary Note 24)

The base station apparatus according to Supplementary Note 23, wherein
the first data is data on which the temporal restriction or requirement is imposed.

(Supplementary Note 25)

The base station apparatus according to Supplementary Note 24, wherein
the first data is data satisfying at least one of:

a condition that a remaining time to complete data transmission is below a first threshold;
a condition that a remaining time to reach a packet delay budget (PDB) is below a second threshold; and
a condition that a remaining time to reach a protocol data unit-set delay budget (PSDB) is below a third threshold.

(Supplementary Note 26)

The base station apparatus according to any one of Supplementary Notes 23 to 25, wherein the second data include data having a priority lower than a priority of the first data.

(Supplementary Note 27)

The base station apparatus according to any one of Supplementary Note 26, wherein the second data is all of the certain data.

(Supplementary Note 28)

The base station apparatus according to any one of Supplementary Notes 22 to 27, wherein

the first information includes information related to a size of the first data, and
the second information includes information related to a size of the second data.

(Supplementary Note 29)

The base station apparatus according to any one of Supplementary Notes 22 to 28, wherein

the first information includes information related to a delay of the first data, and
the second information includes information related to a delay of the second data.

(Supplementary Note 30)

The base station apparatus according to any one of Supplementary Notes 22 to 29, wherein the communicator is further configured to transmit, to the terminal apparatus, configuration information indicating transmission of the first information.

(Supplementary Note 31)

The base station apparatus according to Supplementary Note 30, wherein
the configuration information includes at least one of:

a first threshold related to a remaining time to complete data transmission;
a second threshold related to a packet delay budget (PDB); and
a third threshold related to a protocol data unit-set delay budget (PSDB).

(Supplementary Note 32)

The base station apparatus according to any one of Supplementary Notes 22 to 31, wherein the BSR includes

a first BSR including the first information, and
a second BSR including the second information.

(Supplementary Note 33)

The base station apparatus according to any one of Supplementary Notes 22 to 31, wherein the BSR includes

a first BSR including the first information and the second information, and

a second BSR (1200) including the second information.

(Supplementary Note 34)

The base station apparatus according to Supplementary Note 32 or 33, wherein identification information for identifying whether the BSR is the first BSR or the second BSR is included in a header or a control element (CE) of a Medium Access Control Protocol Data Unit (MAC PDU) including the BSR.

(Supplementary Note 35)

The base station apparatus according to Supplementary Note 32 or 33, wherein the controller is further configured to preferentially allocate the radio resource to the terminal apparatus which transmits the first BSR.

(Supplementary Note 36)

The base station apparatus according to any one of Supplementary Notes 22 to 35, wherein

the certain data is a unit of data to be reported in the BSR, and
the certain data is

data corresponding to one logical channel,
data corresponding to one logical channel group (LCG),
data corresponding to one or more protocol data unit sets (PDU sets), or
data corresponding to one or more data bursts.

(Supplementary Note 37)

The base station apparatus according to Supplementary Note 36, wherein the communicator is further configured to transmit, to the terminal apparatus, configuration information indicating a type of the certain data.

(Supplementary Note 38)

A method of a base station apparatus (20), the method comprising:

receiving, as buffer status reporting (BSR), first information related to first data included in certain data and second information related to second data included in the certain data from a terminal apparatus; and
allocating, based on the BSR, a radio resource to the terminal apparatus.

(Supplementary Note 39)

A program causing a processor (201) in a base station apparatus (20) to execute:

receiving, as buffer status reporting (BSR), first information related to first data included in certain data and second information related to second data included in the certain data from a terminal apparatus; and

allocating, based on the BSR, a radio resource to the terminal apparatus.

(Supplementary Note 40)

A non-transitory tangible storage medium having recorded thereon a program causing a processor (201) in a base station apparatus (20) to execute:

receiving, as buffer status reporting (BSR), first information related to first data included in certain data and second information related to second data included in the certain data from a terminal apparatus; and

allocating, based on the BSR, a radio resource to the terminal apparatus.

The disclosure contents of the above-mentioned related art documents and reference literature are incorporated herein by reference.

**Claims**

1. A terminal apparatus (10) comprising:

a controller (110) configured to acquire first information related to first data included in certain data and second information related to second data included in the certain data; and

a communicator (120) configured to transmit, to a base station apparatus, the first information and the second information as buffer status reporting (BSR).

2. The terminal apparatus according to claim 1, wherein

the controller is further configured to judge the first data and the second data, based on a priority, and

the first data is data having a priority higher than a priority of the second data.

3. The terminal apparatus according to claim 2, wherein

the controller is further configured to use, as the priority, a temporal restriction or requirement, and

the first data is data on which the temporal restriction or requirement is imposed.

4. The terminal apparatus according to claim 3, wherein

the first data is data satisfying at least one of:

a condition that a remaining time to complete data transmission is below a first threshold;

a condition that a remaining time to reach a packet delay budget (PDB) is below a second threshold; and

a condition that a remaining time to reach a protocol data unit-set delay budget (PSDB) is below a third threshold.

5. The terminal apparatus according to claim 2, wherein the second data include data having a priority lower than a priority of the first data.

6. The terminal apparatus according to claim 5, wherein the second data is all of the certain data.

7. The terminal apparatus according to claim 1, wherein

the first information includes information related to a size of the first data, and

the second information includes information related to a size of the second data.

8. The terminal apparatus according to claim 1, wherein

the first information includes information related to a delay of the first data, and

the second information includes information related to a delay of the second data.

9. The terminal apparatus according to claim 1, wherein

the communicator is further configured to receive, from the base station apparatus, configuration information indicating transmission of the first information, and

the controller is further configured to select that, in accordance with the configuration information, the first information is to be transmitted as the BSR.

10. The terminal apparatus according to claim 9, wherein the configuration information includes at least one of:

a first threshold related to a remaining time to complete data transmission;

a second threshold related to a packet delay budget (PDB); and

a third threshold related to a protocol data unit-set delay budget (PSDB).

11. The terminal apparatus according to claim 10, wherein the controller is further configured to judge the first data, based on at least one of the first threshold, the second threshold, and the third threshold.

12. The terminal apparatus according to claim 1, wherein

the BSR includes

a first BSR (1100) including the first information (1120), and
a second BSR (1200) including the second information (1220), and

the controller is further configured to select, as the BSR to be transmitted to the base station apparatus, either the first BSR or the second BSR.

13. The terminal apparatus according to claim 1, wherein

the BSR includes

a first BSR (1100) including the first information (1121a, 1122a) and the second information (1121b, 1122b), and
a second BSR (1200) including the second information (1220), and

the controller is further configured to select, as the BSR to be transmitted to the base station apparatus, either the first BSR or the second BSR.

14. The terminal apparatus according to claim 12 or 13, wherein
the controller is further configured to

select the first BSR in a case where a certain condition is satisfied, and
select the second BSR in a case where the certain condition is not satisfied, and the certain condition is one or a combination of
a condition that configuration information received from the base station apparatus indicates transmission of the first information, and
a condition that the first data is present in uplink data.

15. The terminal apparatus according to claim 12 or 13, wherein identification information for identifying whether the BSR is the first BSR or the second BSR is included in a header or a control element (CE) of a Medium Access Control Protocol Data Unit (MAC PDU) including the BSR.

16. The terminal apparatus according to claim 13, wherein

the communicator is further configured to receive, from the base station apparatus, configuration information indicating transmission of the first information, and
the controller is further configured to generate the first BSR such that the first BSR includes the first information corresponding to the configuration information.

17. The terminal apparatus according to claim 1, wherein

the certain data is a unit of data to be reported in the BSR, and
the certain data is

data corresponding to one logical channel,
data corresponding to one logical channel group (LCG),
data corresponding to one or more protocol data unit sets (PDU sets), or
data corresponding to one or more data bursts.

18. The terminal apparatus according to claim 17, wherein

the communicator is further configured to receive, from the base station apparatus, configuration information indicating a type of the certain data, and
the controller is further configured to select, based on the configuration information, the type of the certain data.

19. A base station apparatus (20) comprising:

a communicator (220) configured to receive, as buffer status reporting (BSR), first information related to first data included in certain data and second information related to second data included in the certain data from a terminal apparatus; and
a controller (210) configured to allocate, based on the BSR, a radio resource to the terminal apparatus.

S

CORE NETWORK  ~ 30

NG                    NG

20 ~ BASE STATION APPARATUS  — Xn —  BASE STATION APPARATUS  ~ 20

TERMINAL APPARATUS                    TERMINAL APPARATUS

10                                    10

Fig. 1

| TERMINAL APPARATUS | BASE STATION APPARATUS |
|---|---|
| SDAP | SDAP |
| PDCP | PDCP |
| RLC | RLC |
| MAC | MAC |
| PHY | PHY |

10

20

Fig. 2

Fig. 3

Fig. 4

10

TERMINAL APPARATUS

120

COMMUNICATOR

110

CONTROLLER

TRANSMITTER ~121

RECEIVER ~122

Fig. 5

Fig. 6

20

BASE STATION APPARATUS

220

COMMUNICATOR

210

CONTROLLER

TRANSMITTER —221

RECEIVER —222

230

NETWORK
COMMUNICATOR

Fig. 7

Fig. 8

900 〜 | LCG ID | Buffer Size |

910

920

Fig. 9

| | LCG7 | LCG6 | LCG5 | LCG4 | LCG3 | LCG2 | LCG1 | LCG0 |
|---|---|---|---|---|---|---|---|---|

1010

1021    Buffer Size (LCG1)

1022    Buffer Size (LCG2)

1020

Fig. 10

Fig. 11

Fig. 12

10

20

TERMINAL
APPARATUS

BASE STATION
APPARATUS

RRC MESSAGE                    S1301

BSR                            S1302

Fig. 13

START

S1401
IS CONDITION C SATISFIED?

No

Yes

S1402
SELECT FIRST BSR

S1403
SELECT SECOND BSR

S1404
TRANSMIT BSR

END

Fig. 14

| LCG7 | LCG6 | LCG5 | LCG4 | LCG3 | LCG2 | LCG1 | LCG0 |
|------|------|------|------|------|------|------|------|
|      |      |      |      |      |      |      |      |

1110a
1110
1110b

Buffer Size (LCG1)

1121

Buffer Size (LCG2)

1122

1120

1100

Fig. 15

| LCG7 | LCG6 | LCG5 | LCG4 | LCG3 | LCG2 | LCG1 | LCG0 |

1610

1621a — Buffer Size (LCG1)

1621b — Buffer Size (LCG1)

1622a — Buffer Size (LCG2)

1622b — Buffer Size (LCG2)

1620

1600

Fig. 16

| | LCG7 | LCG6 | LCG5 | LCG4 | LCG3 | LCG2 | LCG1 | LCG0 |
|---|---|---|---|---|---|---|---|---|

1710

1721a — Buffer Size (LCG1)

1721b — Buffer Size (LCG1)

1722b — Buffer Size (LCG2)

1720

1700

Fig. 17

# INTERNATIONAL SEARCH REPORT

| International application No. |
| PCT/JP2023/037949 |

| A. | CLASSIFICATION OF SUBJECT MATTER |
| --- | --- |

*H04W 72/21*(2023.01)i; *H04W 72/543*(2023.01)i; *H04W 72/566*(2023.01)i
FI:   H04W72/21; H04W72/566; H04W72/543

According to International Patent Classification (IPC) or to both national classification and IPC

| B. | FIELDS SEARCHED |
| --- | --- |

Minimum documentation searched (classification system followed by classification symbols)

H04W72/21; H04W72/543; H04W72/566

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | LG ELECTRONICS INC. Discussion on BSR enahancement for timing information in XR. 3GPP TSG RAN WG2 #119bis-e R2-2210599. Internet<URL:https://www.3gpp.org/ftp/tsg_ran/WG2_RL2/TSGR2_119bis-e/Docs/R2-2210599.zip>. 30 September 2022<br>pp. 1-2 | 1-19 |
| A | NOKIA. NOKIA SHANGHAI BELL. BSR for XR. 3GPP TSG RAN WG2 #119bis-e R2-2209558. Internet<URL:https://www.3gpp.org/ftp/tsg_ran/WG2_RL2/TSGR2_119bis-e/Docs/R2-2209558.zip>. 30 September 2022<br>pp. 1-3, section 2 | 1-19 |
| A | OPPO. Discussion on feedback enhancement. 3GPP TSG RAN WG2 #119bis-e R2-2210024. Internet<URL:https://www.3gpp.org/ftp/tsg_ran/WG2_RL2/TSGR2_119bis-e/Docs/R2-2210024.zip>. 30 September 2022<br>p. 2, lines 36-41 | 1-19 |
| A | CMCC. Consideration on BSR enhancement for XR. 3GPP TSG RAN WG2 #119bis-e R2-22010150. Internet<URL:https://www.3gpp.org/ftp/tsg_ran/WG2_RL2/TSGR2_119bis-e/Docs/R2-2210150.zip>. 30 September 2022<br>p. 4, section 2.3 | 1-19 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 November 2023** | **05 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**EP 4 615 117 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022177219 A